# EUROPEAN PATENT APPLICATION

(11) **EP 4 841 436 A1**
(43) Date of publication of application: **18.11.2026**
(21) Application number: 24916649.7
(22) Date of filing: 11.12.2024
(51) Int. Cl.: G06F 9/451

(54) **DATA PROCESSING METHOD AND APPARATUS BASED ON MULTI-END APPLICATION PLATFORM, DEVICE, AND MEDIUM**

(30) Priority: 12.01.2024 CN 202410047838
(71) Applicant: Tencent Technology (Shenzhen) Company Limited, Shenzhen, Guangdong 518057 (CN)
(72) Inventor: DONG, Yuankai, Shenzhen, Guangdong 518057 (CN); GUO, Fengmian, Shenzhen, Guangdong 518057 (CN); LI, Kexin, Shenzhen, Guangdong 518057 (CN); ZHANG, Chen, Shenzhen, Guangdong 518057 (CN)
(74) Representative: Gunzelmann, Rainer
(86) International application number: PCT/CN2024/138516
(87) International publication number: WO 2025/148602

(57) **Abstract**

The present application provides a data processing method and apparatus based on a multi-end application platform, a device, and a medium. The method comprises: in response to a confirmation operation for component configuration information configured in a component creation interface, switching the component creation interface back to an application processing interface, and when a mode in the application processing interface is a component development mode, displaying a component project file stored in a component directory file; in response to a configuration operation for a template component source code in the component project file, performing configuration to obtain a source code calling sentence used for calling a service component, and generating a component configuration source code by means of the template component source code and the source code calling sentence; and publishing the service component constructed by the component configuration source code, constructing a second application on a multi-end application platform by means of an application project file, a second toolkit and the service component, and when the second application is running, calling the service component by means of the second toolkit to execute a component service. The present application can improve the execution success rate of services.

## Description

### RELATED APPLICATION

This application claims priority to Chinese Patent Application No. 202410047838X, filed with the China National intellectual Property Administration on January 12, 2024 and entitled "DATA PROCESSING METHOD AND APPARATUS BASED ON MULTI-END APPLICATION PLATFORM, DEVICE, AND MEDIUM", which is incorporated herein by reference in its entirety.

### FIELD OF THE TECHNOLOGY

The present disclosure relates to the field of computer technologies, and in particular, to a data processing method and apparatus based on a multi-end application platform, a device, and a medium.

### BACKGROUND OF THE DISCLOSURE

Currently, a mini program developer may compile a source code file of a mini program (for example, an application 1) by using a multi-end framework, to obtain a multi-end application, for example, an iOS (a running environment) mobile application or an Android (a running environment) mobile application, to implement multi-end development of an application. A functional service (for example, a functional service A) of the application 1 is provided by a mini program toolkit (a toolkit for installation in the mini program, which is referred to in full as a software development kit) installed in the application 1. Correspondingly, when executing the functional service A, the iOS mobile application (for example, an application 2) corresponding to the application 1 also needs to implement the execution by invoking an iOS toolkit (that is, a toolkit for installation in the iOS application) installed in the application 2.

However, the inventor finds in practice that when the mini program developer does not synchronously develop the iOS toolkit adapted to the application 2, the multi-end framework usually generates the application 2 by using a general-purpose iOS toolkit officially published, where the general-purpose iOS toolkit may not be able to provide all functional services required by the application 2. For example, when a functional service provided by the general-purpose iOS toolkit does not include the functional service A, the application 2 cannot normally use the functional service A. This means that when the multi-end application is developed by using the multi-end framework, how to ensure a success rate of executing a functional service of a specific application (for example, the application 2) in the multi-end application is a technical problem to be urgently resolved currently.

### SUMMARY

Embodiments of the present disclosure provide a data processing method and apparatus based on a multi-end application platform, a device, and a medium, so as to improve a success rate of executing a service of a specific application in a multi-end application.

According to an aspect, an embodiment of the present disclosure provides a data processing method based on a multi-end application platform. The multi-end application platform is configured to develop a multi-end application by using an application project file of a first application. The multi-end application includes the first application. The method includes:
displaying an application processing interface corresponding to the application project file on the multi-end application platform, and when a mode in the application processing interface is an application development mode corresponding to the multi-end application, displaying a component creation control preconfigured for the application development mode;
displaying, in response to a trigger operation for the component creation control, a component creation interface corresponding to the component creation control, and displaying component configuration information configured for a service component in the component creation interface, the component configuration information including a component identifier of the service component, a component directory address, and a target application identifier bound to the component identifier, and a second application corresponding to the target application identifier being an application in the multi-end application that is different from the first application;
switching the component creation interface back to the application processing interface in response to a confirmation operation for the component configuration information, switching, in response to a mode switching operation for the application processing interface, the mode in the application processing interface from the application development mode to a component development mode configured for developing the service component, and displaying, in the component development mode by using the component directory address, a component directory file created for the service component, the component directory file being configured for storing a component project file configured for the service component, and component source code in the component project file being template component source code that is adapted to the second application and that carries the component identifier;
obtaining, through configuration in response to a configuration operation for the template component source code, a source code invocation statement configured for invoking the service component, and generating component configuration source code of the service component by using the template component source code and the source code invocation statement, the source code invocation statement being configured for establishing a communication channel between a second toolkit of the second application and the service component, and the second toolkit being provided by the multi-end application platform;
obtaining the service component through compilation by using the component configuration source code, and publishing and displaying the service component on the multi-end application platform; and
constructing the second application on the multi-end application platform based on the application project file, the second toolkit, and the service component, the second application being configured to indicate, during running, the second toolkit to invoke the service component based on the communication channel, to execute a component service provided by the service component, and the component service being configured for a service of the first application.

According to another aspect, an embodiment of the present disclosure provides a data processing method based on a multi-end application platform. A multi-end application on the multi-end application platform includes a first application and a second application. The second application is constructed on the multi-end application platform by using an application project file of the first application, a second toolkit, and a service component. The second toolkit is provided by the multi-end application platform for the second application. The service component is constructed on the multi-end application platform based on component configuration source code. The component configuration source code is obtained in response to a configuration operation for template component source code. A source code invocation statement corresponding to the configuration operation is configured for establishing a communication channel between the second toolkit and the service component. The template component source code is component source code in a component project file displayed in a component development mode. The component development mode is a mode in an application processing interface that corresponds to the application project file and that is displayed on the multi-end application platform. The component project file is stored in a component directory file created for the service component. The component directory file is determined by using a component directory address in component configuration information configured for the service component. The method includes:
obtaining, in response to a trigger operation for a service control corresponding to the service component during running of the second application, a service parameter configured for invoking the service component;
transferring the service parameter to the second toolkit, the second toolkit transferring the service parameter to the service component based on a communication relationship indicated by the established communication channel, so that the service component executes a component service based on the service parameter, to obtain a service execution result corresponding to the component service, and returns the service execution result to the second toolkit by using the communication relationship indicated by the communication channel, the communication channel being established based on the source code invocation statement in the service component when the second toolkit loads the service component, and the component service being configured for a service of the first application; and
displaying the service execution result returned by the second toolkit.

According to an aspect, an embodiment of the present disclosure provides a data processing apparatus based on a multi-end application platform. The multi-end application platform is configured to develop a multi-end application by using an application project file of a first application. The multi-end application includes the first application. The apparatus includes:
a data display module, configured to display an application processing interface corresponding to the application project file on the multi-end application platform, and when a mode in the application processing interface is an application development mode corresponding to the multi-end application, display a component creation control preconfigured for the application development mode;
the data display module being further configured to display, in response to a trigger operation for the component creation control, a component creation interface corresponding to the component creation control, and display component configuration information configured for a service component in the component creation interface, the component configuration information including a component identifier of the service component, a component directory address, and a target application identifier bound to the component identifier, and a second application corresponding to the target application identifier being an application in the multi-end application that is different from the first application;
a component file display module, configured to switch the component creation interface back to the application processing interface in response to a confirmation operation for the component configuration information, switch, in response to a mode switching operation for the application processing interface, the mode in the application processing interface from the application development mode to a component development mode configured for developing the service component, and display, in the component development mode by using the component directory address, a component directory file created for the service component, the component directory file being configured for storing a component project file configured for the service component, and component source code in the component project file being template component source code that is adapted to the second application and that carries the component identifier;
a component source code configuration module, configured to obtain, through configuration in response to a configuration operation for the template component source code, a source code invocation statement configured for invoking the service component, and generate component configuration source code of the service component by using the template component source code and the source code invocation statement, the source code invocation statement being configured for establishing a communication channel between a second toolkit of the second application and the service component, and the second toolkit being provided by the multi-end application platform;
a component construction module, configured to obtain the service component through compilation by using the component configuration source code, and publish and display the service component on the multi-end application platform; and
a multi-end application development module, configured to construct the second application on the multi-end application platform based on the application project file, the second toolkit, and the service component, the second application being configured to indicate, during running, the second toolkit to invoke the service component based on the communication channel, to execute a component service provided by the service component, and the component service being configured for a service of the first application.

According to another aspect, an embodiment of the present disclosure provides a data processing apparatus based on a multi-end application platform. A multi-end application on the multi-end application platform includes a first application and a second application. The second application is constructed on the multi-end application platform by using an application project file of the first application, a second toolkit, and a service component. The second toolkit is provided by the multi-end application platform for the second application. The service component is constructed on the multi-end application platform based on component configuration source code. The component configuration source code is obtained in response to a configuration operation for template component source code. A source code invocation statement corresponding to the configuration operation is configured for establishing a communication channel between the second toolkit and the service component. The template component source code is component source code in a component project file displayed in a component development mode. The component development mode is a mode in an application processing interface that corresponds to the application project file and that is displayed on the multi-end application platform. The component project file is stored in a component directory file created for the service component. The component directory file is determined by using a component directory address in component configuration information configured for the service component. The apparatus includes:
a service parameter obtaining module, configured to obtain, in response to a trigger operation for a service control corresponding to the service component during running of the second application, a service parameter configured for invoking the service component;
a service processing module, configured to transfer the service parameter to the second toolkit, the second toolkit transferring the service parameter to the service component based on a communication relationship indicated by the established communication channel, so that the service component executes a component service based on the service parameter, to obtain a service execution result corresponding to the component service, and returns the service execution result to the second toolkit by using the communication relationship indicated by the communication channel, the communication channel being established based on the source code invocation statement in the service component when the second toolkit loads the service component, and the component service being configured for a service of the first application; and
a result display module, configured to display the service execution result returned by the second toolkit.

According to an aspect of the embodiments of the present disclosure, a computer device is provided, and includes a memory and a processor. The memory is connected to the processor. The memory is configured to store a computer program. The processor is configured to invoke the computer program, so that the computer device performs the method according to the foregoing aspect of the embodiments of the present disclosure.

According to an aspect of the embodiments of the present disclosure, a computer-readable storage medium is provided, and has a computer program stored therein. The computer program is suitable for a processor to load and execute, so that a computer device with the processor performs the method according to the foregoing aspect of the embodiments of the present disclosure.

According to an aspect of the present disclosure, a computer program product is provided, and includes a computer program. The computer program is executed by a processor to implement the method according to any one of the foregoing aspects of the embodiments of the present disclosure.

In the embodiments of the present disclosure, the multi-end application platform is configured to develop the multi-end application by using the application project file of the first application. The multi-end application herein may include at least the first application. In this case, the first application is an application currently developed by using the multi-end application platform. For ease of understanding, an example in which the first application is a mini program application is used herein. In this case, when the multi-end application platform is deployed on the computer device, another application may be further developed by using the application project file of the first application that is obtained by developing the first application. For example, the computer device may display the application processing interface of the application project file on the multi-end application platform, and when the mode in the application processing interface is the application development mode corresponding to the multi-end application, may display the component creation control preconfigured for the application development mode. Further, the computer device may display, in response to the trigger operation for the component creation control, the component creation interface corresponding to the component creation control, and configure, in the component creation interface for the to-be-created service component, the component identifier of the service component, the component directory address configured for storing the component project file of the service component, and an application identifier (that is, the target application identifier) bound to the component identifier. In this way, the computer device may collectively refer to the component identifier, the component directory address, and the target application identifier that are configured in the component creation interface as the component configuration information that is displayed in the component creation interface and that is configured for the service component. The second application corresponding to the target application identifier herein is an application in the multi-end application that is different from the first application (for example, an application running environment of the second application may be different from an application running environment of the first application). Configuring the component identifier and the target application identifier in the component creation interface is for directionally binding the service component corresponding to the current component identifier to the subsequently constructed second application corresponding to the target application identifier, so that when the second application is subsequently run, the service component can be loaded based on the component identifier bound to the target application identifier of the second application. Further, the computer device may switch, in response to the confirmation operation for the component configuration information, the component creation interface currently displayed by the computer device back to the application processing interface, and perform a mode switching operation for the component processing interface. In this case, the computer device may switch, in response to the mode switching operation, the mode in the application processing interface from the application development mode to the component development mode configured for developing the service component, and display, in the component development mode by using the component directory address preconfigured in the component configuration information, the component directory file created for the service component. The component directory file may be configured for storing the component project file configured for the service component, where the component source code in the component project file is the template component source code that is adapted to the second application (for example, specifically adapted to syntax in the application running environment corresponding to the second application) and that carries the component identifier. Further, the computer device may obtain, through configuration in response to the configuration operation for the template component source code, the source code invocation statement configured for invoking the service component. The source code invocation statement may be configured for triggering invocation of a part of source code in the template component source code. For example, in an implementable manner, the source code invocation statement may be configured for establishing the communication channel between the second toolkit of the second application and the service component. The second toolkit is provided by the multi-end application platform. Therefore, the computer device may further generate the component configuration source code of the service component by using the template component source code and the source code invocation statement, and obtain, through compilation by using the component configuration source code, the service component configured to implement a specified service (that is, the component service, where the component service is configured based on the service of the first application). Further, the computer device may publish and display the service component currently obtained through compilation on the multi-end application platform. Then, the computer device may construct the second application on the multi-end application platform based on the application project file, the second toolkit, and the service component. The second application herein is configured to indicate, during running, the second toolkit to invoke the service component based on the communication channel, to execute the component service provided by the service component. The component service is configured for the service of the first application. As can be seen, in the embodiments of the present disclosure, a service component having a service (a component service) may be constructed by using a visual interface. In this way, during running of the second application, the second toolkit may invoke the service component through a communication channel pre-established between the second toolkit and the service component during construction of the service component, so that during running of the second application, the service component can be indirectly invoked to execute the component service provided by the service component. In other words, in the embodiments of the present disclosure, when a service component is generated for a service (service A), a communication channel between an application toolkit (that is, the second toolkit) in the second application and the service component may be established to break through a limitation of a service provided by the second toolkit, to help the second application normally use, by using the second toolkit, the service A provided by the service component. In other words, in the embodiments of the present disclosure, service expansion of the application toolkit (that is, the second toolkit) for the second application may be conveniently and flexibly implemented through the communication channel established during construction of the service component. Therefore, when the second application is developed, the generated second application can implement some custom services more conveniently by using the flexibly integrated service component. This can not only improve flexibility of application development but also improve a success rate of executing a service of a specific application (for example, the second application) in the multi-end application.

### BRIEF DESCRIPTION OF THE DRAWINGS

FIG. 1 is a schematic diagram of a network architecture according to an embodiment of the present disclosure.
FIG. 2 is a schematic diagram of a component generation process according to an embodiment of the present disclosure.
FIG. 3 is a schematic diagram of a component invocation process according to an embodiment of the present disclosure.
FIG. 4 is a schematic flowchart of a data processing method based on a multi-end application platform according to an embodiment of the present disclosure.
FIG. 5 is a schematic diagram of an application processing interface according to an embodiment of the present disclosure.
FIG. 6 is a schematic diagram of a process of displaying template component source code according to an embodiment of the present disclosure.
FIG. 7 is a schematic diagram of a service component construction process according to an embodiment of the present disclosure.
FIG. 8 is a schematic diagram of another service component construction process according to an embodiment of the present disclosure.
FIG. 9 is a schematic diagram of still another service component construction process according to an embodiment of the present disclosure.
FIG. 10 is a schematic diagram of a service component publishing process according to an embodiment of the present disclosure.
FIG. 11 is a schematic flowchart of another data processing method based on a multi-end application platform according to an embodiment of the present disclosure.
FIG. 12 is a schematic diagram of a process of generating a second application according to an embodiment of the present disclosure.
FIG. 13 is a schematic diagram of another process of generating a second application according to an embodiment of the present disclosure.
FIG. 14 is a schematic diagram of still another process of generating a second application according to an embodiment of the present disclosure.
FIG. 15 is a schematic diagram of a generation scenario of a second application according to an embodiment of the present disclosure.
FIG. 16 is a schematic flowchart of still another data processing method based on a multi-end application platform according to an embodiment of the present disclosure.
FIG. 17 is a schematic flowchart of interaction for service execution according to an embodiment of the present disclosure.
FIG. 18 is a schematic diagram of a structure of a data processing apparatus based on a multi-end application platform according to an embodiment of the present disclosure.
FIG. 19 is a schematic diagram of a structure of another data processing apparatus based on a multi-end application platform according to an embodiment of the present disclosure.
FIG. 20 is a schematic diagram of a structure of a computer device according to an embodiment of the present disclosure.

### DESCRIPTION OF EMBODIMENTS

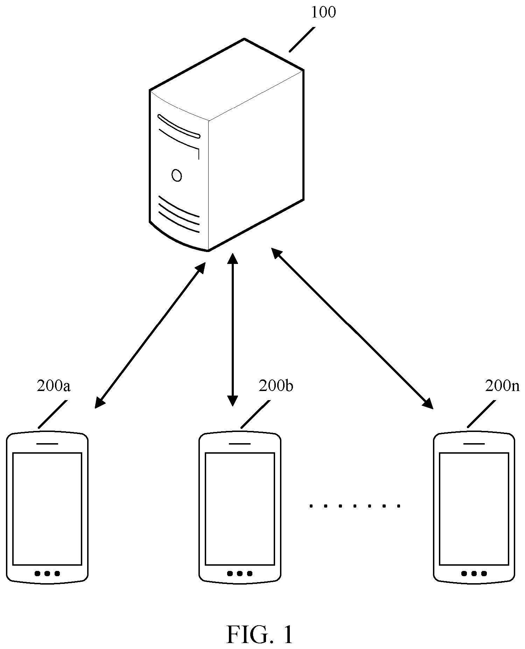

Referring to FIG. 1, FIG. 1 is a schematic diagram of a network architecture according to an embodiment of the present disclosure. As shown in FIG. 1, the network architecture may include a service server 100 and a service terminal cluster. The service terminal cluster may include one or more service terminals (for example, user terminals). A quantity of service terminals in the service terminal cluster is not limited herein. As shown in FIG. 1, the plurality of service terminals in the service terminal cluster may specifically include a service terminal 200a, a service terminal 200b, ..., and a service terminal 200n. There may be a communication connection between the service terminals in the service terminal cluster. For example, there is a communication connection between the service terminal 200a and the service terminal 200b, and there is a communication connection between the service terminal 200a and the service terminal 200n. In addition, there may be a communication connection between any service terminal in the service terminal cluster and the service server 100, so that each service terminal in the service terminal cluster can exchange data with the service server 100 through the communication connection. For example, there is a communication connection between the service terminal 200a and the service server 100. A connection mode of the communication connection is not limited. A direct or indirect connection may be established through wired communication or wireless communication or in another manner. This is not limited in the present disclosure.

Each service terminal in the service terminal cluster shown in FIG. 1 may be installed with a multi-end application (for example, a second application) developed by using a multi-end application platform. When run in each service terminal, the second application may exchange data with the service server 100 shown in FIG. 1. The second application may be any type of application, for example, may be an application having a function of displaying data information such as a text, an image, an audio, and a video, for example, a social application, a text processing application, an instant messaging application (for example, a conference application), an entertainment application (for example, a game application or a live streaming application), an information application (for example, a news information application), a shopping application, an in-vehicle application, or a multimedia application.

For example, a data exchange process between the service terminal 200a and the service server 100 is described herein by using an example in which the second application is the game application. The game application is a client that can instantly transmit and receive an Internet message and that has an information search function and the like. A service component (also referred to as a service plug-in) in the game application may be a payment component configured to execute a payment service. When the payment service (for example, a service configured for purchasing game equipment) is executed by using the game application on the service terminal 200a, an application toolkit in the game application may invoke, through a communication channel pre-established between the application toolkit in the game application and the payment component, the payment component to execute the payment service. In this way, when invoking the payment component to execute the payment service, the game application on the service terminal 200a may exchange data with the service server. For example, the payment component may transmit a payment request to the service server, and the service server returns a payment result after completing payment based on the payment request.

A computer device in the embodiments of the present disclosure may be a server (for example, the service server 100 shown in FIG. 1), or may be a terminal (for example, any service terminal in the service terminal cluster shown in FIG. 1). The server may be an independent physical server, a server cluster or distributed system including a plurality of physical servers, or a cloud server providing a basic cloud computing service such as a cloud service, a cloud database, cloud computing, a cloud function, cloud storage, a network service, cloud communication, a middleware service, a domain name service, a security service, a content delivery network (CDN), and a big data and artificial intelligence platform. The terminal may be but is not limited to a smartphone, a tablet computer, a notebook computer, a desktop computer, a smart speaker, a smartwatch, an in-vehicle terminal, a flight vehicle, or the like. The embodiments of this disclosure may be applied to various scenarios, including but not limited to, a cloud technology, artificial intelligence, intelligent transportation, assisted driving, and the like.

FIG. 1 merely represents a possible network architecture of the technical solution of the present disclosure by using an example, and does not limit a specific architecture of the technical solution of the present disclosure. In other words, the technical solution of the present disclosure may further provide a network architecture in another form.

For ease of understanding, related concepts in the present disclosure are explained in the embodiments of the present disclosure. Details are as follows.
1. Mini program: The mini program in the embodiments of the present disclosure is an independent program that may be embedded and run on a client. This means that in the embodiments of the present disclosure, an independent program that is run on a client (that is, a target client, for example, the foregoing social application) by using a mini program runtime technology may be collectively referred to as a mini program.
2. Developer tool: A development tool in the embodiments of the present disclosure is a development tool that may be provided for a developer to use. For example, in the embodiments of the present disclosure, a development tool used by the developer to develop a mini program for the foregoing client (that is, the target client, for example, the foregoing social application) may be collectively referred to as a developer tool. In the embodiments of the present disclosure, to facilitate the developer to implement multi-end development by using the developer tool, a multi-end framework (for example, a Donut multi-end framework) may be deployed and run on the development tool. Therefore, a developer tool on which the multi-end framework is deployed may be collectively referred to as a multi-end application platform. In this case, the multi-end application platform is a developer tool that can be deployed on a computer device to support the developer in developing a multi-end application in a multi-end application mode.
   Specifically, when the developer may develop an application (that is, a first application, for example, a mini program) by using a visual interface provided by the multi-end application platform, a service component corresponding to a service of the first application is developed for another application corresponding to a specified application identifier, so that a second application may be constructed based on an application project file of the first application, an application toolkit of the another application (that is, a second application) provided by the multi-end application platform, and the currently developed service component (which essentially may be understood as a plug-and-play plug-in). Therefore, during running, the second application can flexibly invoke the service component based on a communication channel pre-established between the application toolkit of the another application (that is, the second application) and the service component during construction of the service component, and a component service the same as the service provided by the first application can be executed by using the invoked service component.
3. Multi-end framework: is an officially launched promoted that supports development of a mobile application by using native syntax of a mini program. A developer may perform encoding once by using the multi-end framework, to implement multi-end development, for example, may obtain a mini program that may be embedded in a client, an application in a running environment (for example, an Android application in an Android running environment), and an application in another running environment (for example, an iOS application in an iOS running environment) through compilation by using the multi-end framework based on an application project file of an application.
4. Multi-end application: is an application obtained through compilation by using a Donut multi-end framework, for example, the foregoing mini program, Android application, and iOS application. In the embodiments of the present disclosure, if a first application is the mini program, an application project file of the first application may be a mini program project file of the mini program that is obtained through encoding according to native syntax of the mini program. In some embodiments, if the first application is the Android application, the application project file of the first application may be an Android application project file of the Android application that is obtained through encoding according to Android native syntax adapted to the Android running environment. By analogy, if the first application is the iOS application, the application project file of the first application may be an iOS application project file of the iOS application that is obtained through encoding according to iOS native syntax adapted to the iOS running environment. In addition, in the embodiments of the present disclosure, an application other than the first application (that is, the currently developed application) in the multi-end application developed by using the multi-end framework may be collectively referred to as a second application. The second application is an application developed by a multi-end application platform installed with the multi-end framework by using the application project file of the first application.
5. Software development kit (SDK): In the embodiments of the present disclosure, an SDK that is provided by a multi-end framework (or for example, specifically a developer tool integrated with a multi-end framework, that is, a multi-end application platform) and that is configured to assist a multi-end application in implementing a corresponding service function may be collectively referred to as an application toolkit. In an implementable manner, each application in the multi-end application mainly includes an SDK (that is, an application toolkit) for each application and a resource package of each application. Further, to implement a service for a specific function, in another implementable manner, a specific application in the multi-end application mainly includes an SDK for the specific application, a resource package of the specific application, and a service plug-in configured for the specific application. The resource package of the specific application (for example, a second application) is obtained through encoding for the specific application based on the application project file of the foregoing first application (that is, a project file in which a resource package of the first application is located).
   For example, an SDK used by a mini program application (that is, a mini program) is a mini program SDK, an SDK used by an iOS application (for example, an iOS mobile application) is an iOS SDK, and similarly, an SDK used by an Android application (for example, an Android mobile application) is an Android SDK.
6. Application project file: The application project file in the embodiments of the present disclosure is a file in which an application package of a corresponding multi-end application (that is, a resource package of the corresponding multi-end application) is located. For example, for an iOS application, a file in which an application package of the iOS application is located is an IPA (that is, iPhone application) file, where IPA is a file format of an iOS application package. A file whose file format is IPA may be an IPA file. The IPA file herein (that is, a package file of an iOS application for deployment and installation in an iOS application environment) may specifically include all program code, resources, metadata and signatures of the iOS application. In other words, IPA herein is a standard format for installing and deploying an application package of the iOS application on a computer device whose application environment is the iOS.

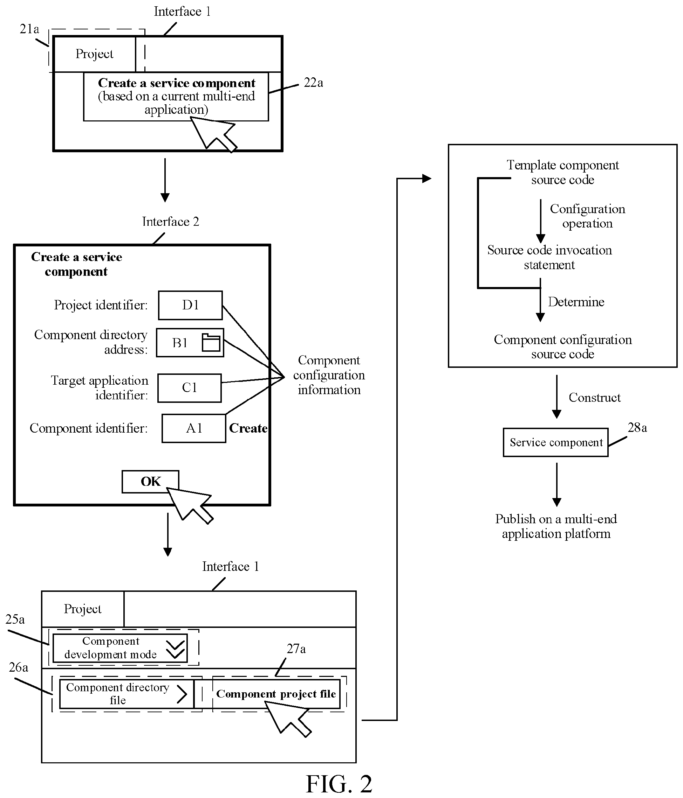

Further, referring to FIG. 2, FIG. 2 is a schematic diagram of a component generation process according to an embodiment of the present disclosure. A component (for example, a service component 28a shown in FIG. 2) in the embodiments of the present disclosure is constructed by using a multi-end application platform deployed on a computer device. The multi-end application platform is a platform configured to develop a multi-end application by using an application project file of an application.

The multi-end application platform may be deployed on the computer device. The computer device may be any service terminal (for example, the service terminal 200a) in the service terminal cluster in FIG. 1. An interface 1 shown in FIG. 2 may be an application processing interface on the multi-end application platform that is configured for displaying an application project file of a first application. In this case, when a mode in the interface 1 (that is, the application processing interface) is an application development mode (for example, a multi-end development mode) corresponding to the multi-end application, a developer needing to develop the service component 28a by using the multi-end application platform may click a project control (for example, a project 21a shown in FIG. 2) displayed in the interface 1 (that is, the application processing interface), to display, in a project list of the project 21a, a component creation control (for example, "Create a service component 22a" shown in FIG. 2, where "Create a service component 22a" displayed in the interface 1 may be a control for creating a plug-in based on the current multi-end application) preconfigured for the application development mode.

Further, the computer device may display, in response to a trigger operation for the component creation control, a component creation interface (for example, an interface 2 configured for creating a service component in FIG. 2) corresponding to the component creation control. In this way, the developer may configure, in the component creation interface (for example, the interface 2 shown in FIG. 2), corresponding component configuration information for a plug-in (that is, a service component) that needs to be created. For example, as shown in FIG. 2, in an implementable manner, the component configuration information herein may specifically include a project identifier (for example, an identifier of a component project file whose project name is "D1") of the plug-in (that is, the service component), a component directory address (for example, a storage address of a component directory file whose directory is "B1"), a target application identifier (for example, an identifier of an application whose application ID is "C1"), and a component identifier (for example, an identifier of a component whose plug-in ID is "A1"). In some embodiments, in another implementable manner, the component configuration information herein may further include other configuration information (for example, whether to generate the plug-in locally on the computer device or whether to generate the plug-in at a cloud).

Further, the computer device may switch a display interface of the multi-end application platform from the interface 2 (that is, the component creation interface) back to the interface 1 (that is, the application processing interface) in response to a confirmation operation for the component configuration information in the interface 2. In this way, the developer may further perform a mode switching operation in the interface 1 (that is, the application processing interface), so that the computer device may switch, in response to the mode switching operation, the mode in the interface 1 (that is, the application processing interface) from the application development mode (that is, the multi-end development mode) to a component development mode 25a configured for developing the service component. As shown in FIG. 2, in this case, the computer device may display, in the component development mode 25a by using the component directory address (for example, "B1" shown in FIG. 2) preconfigured in the component configuration information, a component directory file 26a created for the service component 28a. As shown in FIG. 2, the component directory file 26a may be configured for storing a component project file 27a whose project identifier is "D1" and that is configured for the service component 28a. In this case, component source code in the component project file 27a may be specifically template component source code that is adapted to an application (that is, a second application) corresponding to the target application identifier (for example, "C1" shown in FIG. 2) and that carries the component identifier (for example, D1 shown in FIG. 2).

The template component source code herein is source code (that is, source code) in a development template adaptively selected by the computer device based on a running environment of an application (that is, the second application) corresponding to the target application identifier (for example, the "C1" shown in FIG. 2).

Further, the developer may open the component project file by double-clicking the component project file, to output a source code output interface configured for displaying the template component source code. In this way, when the template component source code is displayed in the source code output interface, the computer device may further obtain, through configuration in response to a configuration operation performed by the developer for the component configuration source code, a source code invocation statement configured for invoking the service component, and generate component configuration source code of the service component by using the template component source code and the source code invocation statement. In this embodiment of the present disclosure, the source code invocation statement may be configured for establishing a communication channel between an application toolkit (that is, a second toolkit) for the second application corresponding to the target application identifier and the service component corresponding to the component identifier. The second toolkit herein is provided by the multi-end application platform. Further, as shown in FIG. 2, the computer device may construct (that is, obtain through compilation) the service component 28a by using the component configuration source code, and publish and display the service component 28a on the multi-end application platform. In this way, the developer may see, on the multi-end application platform, the service component 28a currently directionally developed for a service of the first application.

In this embodiment of the present disclosure, the second application corresponding to the first application may be further generated by using the service component. The second application is a multi-end application in a different format from that of the first application. For example, the first application is an application in a first format (for example, a mini program application) that may be run in a running environment (for example, a first running environment), and the second application is an application in a second format (for example, a mobile application in the second format, where the second format may be, for example, an iOS format, that is, an application corresponding to the iOS format may be an iOS mobile application, also referred to as an iOS application, that is, a mobile application installed in a running environment adapted to the second format) that may be run in another running environment (for example, a second running environment), or in some embodiments, the second application may be an application in a third format (for example, a mobile application in the third format, where the third format may be, for example, an Android format, that is, an application corresponding to the Android format may be an Android mobile application, also referred to as an Android application, that is, a mobile application installed in a running environment adapted to the third format). The running environment adapted to the second format may be the foregoing iOS running environment. Similarly, the running environment adapted to the third format may be the foregoing Android running environment.

The first format, the second format, and the third format are not specifically limited in embodiments of the present disclosure. In other words, the first application and the second application may both be applications (for example, mini program applications or mobile applications) installed in any running environment. With development of services, there may be another format. A generation process of an application in the another format is the same as a generation process of the application in the second format and the application in the third format. The first format, the second format, and the third format are used merely as examples.

Programming languages (that is, development syntax) used for independently developing applications in different formats are different. For example, a programming language 1 is used for independently developing native code of the application in the second format (for example, the iOS application), a programming language 2 is used for independently developing native code of the application in the first format (for example, the mini program application), and a programming language 3 is used for independently developing native code of the application in the third format (for example, the Android application). In this case, the developer may compile, by using the computer device on which the multi-end application platform is deployed, an application processing file corresponding to an application in one format (for example, a project file that contains data of the developed application such as execution logic and a design interface, for example, the application project file of the first application), to obtain an application in another format through compilation. For example, in this embodiment of the present disclosure, a project file of a mini program may be compiled to obtain an iOS application and/or an Android application. This means that in this embodiment of the present disclosure, cross-language and cross-format development of a multi-end application may be implemented by using the multi-end application platform integrated with the multi-end framework.

The mini program is used as an example. All functional services of the mini program are provided by using an application toolkit. The application toolkit (for example, the foregoing mini program SDK, that is, a software development kit for the mini program) configured to provide the functional service in the mini program is a toolkit installed in an application in a mini program format, that is, a programming language for developing the mini program SDK needs to be the programming language 1. All functional services (for example, a native functional service or an open functional service (for example, a sharing service and a payment service) of the application) of a multi-end application (for example, the second application) in another format that is generated on the multi-end application platform based on a mini program (that is, the first application) are also provided by using a corresponding application toolkit provided by the multi-end application platform.

An application toolkit of the application in the second format (for example, the iOS application) is a toolkit installed in the application in the second format, that is, a programming language for developing an SDK for the second format needs to be the programming language 2. An application toolkit of the application in the third format (for example, the Android application) is a toolkit installed in the application in the third format, that is, a programming language for developing an SDK for the third format needs to be the programming language 3. The application toolkit may be configured to provide a service of a corresponding service function to the corresponding application.

When the second application is run, and triggers a component service, the service component may be invoked by using the established communication channel, to execute the component service matching (or the same as) the service of the first application, that is, the second application may implement the component service by using the service component.

In this way, service expansion of the application toolkit is implemented, so that the application toolkit can provide the second application with a function that the application toolkit originally does not have. For example, the second application needs services 1 to 4, and the application toolkit may provide the services 1 to 3. In this case, only a service component for the service 4 needs to be developed. In this way, the service 4 can be normally used in the second application by establishing a communication channel between the application toolkit and the service component, thereby improving, from the root by using the service component, flexibility and efficiency of developing and configuring a corresponding service of the second application.

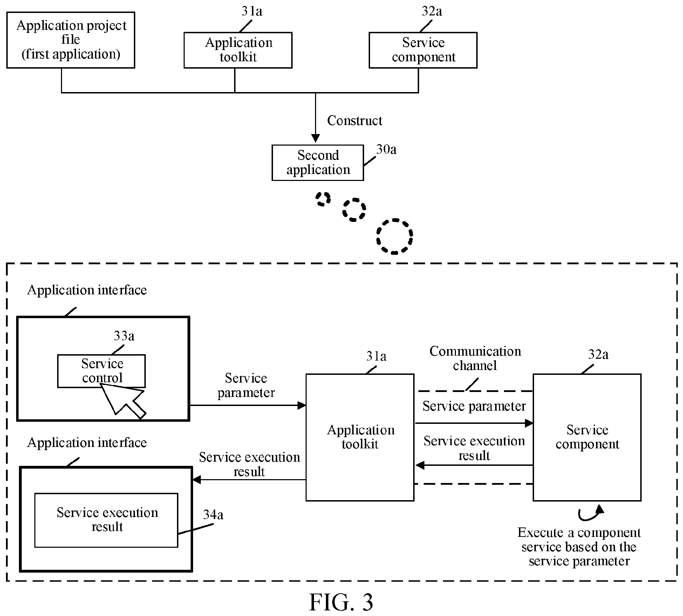

Further, referring to FIG. 3, FIG. 3 is a schematic diagram of a component invocation process according to an embodiment of the present disclosure. As shown in FIG. 3, the developer may construct a second application 30a shown in FIG. 3 on the multi-end application platform by using the application project file of the first application (for example, a project file of the application in the first format that is opened and displayed in the interface 1 by triggering the project 21a in the interface shown in FIG. 2), an application toolkit (that is, the foregoing SDK for the second format) provided by the multi-end application platform for the application (that is, the second application 30a) corresponding to the target application identifier configured in the foregoing component configuration information, and a service component 32a generated by using the multi-end application platform.

This means that the second application 30a may be an application in another format that is generated through compilation by using an application toolkit 31a for a same format as that of the second application and the service component 32a (that is, the service component 28a generated according to the example in FIG. 2) based on the application project file of the first application. Therefore, after the second application 30a is deployed and installed on a computer device (the computer device may be any service terminal, for example, the service terminal 200a, in the service terminal cluster in FIG. 1), the second application 30a is run on the computer device, to display a service control 33a corresponding to the service component 32a in an application interface of the second application 30a (for example, a component service is a payment service, and the service control 33a corresponding to the service component 32a may be specifically a control for enabling a payment function for the payment service). In this case, in response to a trigger operation for the service control 33a corresponding to the service component 32a, that is, when a component service supporting the payment function is triggered in the application interface of the second application, the computer device may further obtain a service parameter configured for invoking the service component 32a, and transfer the currently obtained service parameter to an application toolkit (for example, the application toolkit 31a shown in FIG. 3) for the second application. In this case, the computer device may further transfer the service parameter to the service component 32a by using the application toolkit (that is, the application toolkit 31a shown in FIG. 3) for the second application based on a communication relationship indicated by a communication channel pre-established between the application toolkit of the second application and the service component 32a.

In an implementable manner, the communication channel is established when a source code invocation statement is configured to enable the application toolkit 31a to load the service component during construction of the service component. The application toolkit 31a may load the service component (which may be specifically a test component configured to simulate loading of the service component in a test process) and establish the communication channel when the component service is triggered for the first time (for example, triggered for the first time in the process of testing the test component generated by using component configuration source code before the service component is obtained through compilation by using the component configuration source code). Subsequently, the component service may be executed through the communication channel at any moment when the component service is triggered.

Component service triggering may be control triggering, gesture triggering, voice triggering, or the like, for example, triggering in the application interface of the second application in a manner such as a double click or a gesture swipe or triggering in the application interface of the second application in a manner of voice recognition of a service keyword. This is not limited herein. A triggering manner of the component service is determined based on a specific scenario.

As shown in FIG. 3, after obtaining the service parameter transmitted by the application toolkit 31a through the communication channel, the service component 32a may further execute the component service based on the service parameter, to obtain a service execution result (for example, a service execution result 34a shown in FIG. 3) corresponding to the component service. Then, the service component 32a may return the service execution result (for example, the service execution result 34a shown in FIG. 3) to the application toolkit 31a by using the communication relationship indicated by the pre-established communication channel, so that the application toolkit 31a may further transmit the service execution result (for example, the service execution result 34a shown in FIG. 3) back to the second application. In this way, the second application run on the computer device may display, in the application interface of the second application, the service execution result 34a returned by the application toolkit 31a. Therefore, the service component can be flexibly and conveniently invoked to execute the corresponding component service.

In some embodiments, in a possible implementation, the computer device may perform, based on an actual service requirement, the data processing method based on the multi-end application platform, to improve flexibility and efficiency of application development. The technical solution of the present disclosure may be applied to any multi-end application development scenario. For example, the application in the first format (for example, the mini program application) may be a shopping application 1. The application in the second format (for example, the iOS application), that is, a shopping application 2, corresponding to the shopping application 1 may be generated by using the multi-end application platform. The shopping application 2 may be referred to as a multi-end application corresponding to the shopping application 1. A required service and related logic of the shopping application 2 are the same as those of the shopping application 1. For another example, the application in the first format (for example, the mini program application) may be a game application 1. The application in the second format (for example, the iOS application), that is, a game application 2, corresponding to the game application 1 may be generated by using the multi-end application platform. The game application 2 may be referred to as a multi-end application corresponding to the game application 1. A required service and related logic of the game application 2 are the same as those of the game application 1. In some embodiments, the component service may be any type of service, for example, may be a product sharing service of the shopping application 1, or may be a payment service of the game application 1. A component service for which a service component can be developed is not limited herein. The developer of the first application may develop a service component for any service. For ease of distinguishing, a required service of a multi-end application is referred to as an application service, a service provided by an application toolkit is referred to as a toolkit service, and a service for which a service component is developed is referred to as a component service. In an implementable manner, the service herein may also be referred to as a corresponding network function.

The technical solution of the present disclosure may be applied to a service expansion scenario of an application toolkit. For example, an application service (for example, the services 1 to 4) of the first application (for example, the game application 1) needs to be provided by the application toolkit (the application toolkit 1) for the first application. In other words, when a service (for example, the service 4) of the first application is triggered, the application toolkit 1 is invoked, and the application toolkit 1 executes the triggered service 4.

A toolkit service of the application toolkit of the first application includes the services 1 to 4. In this case, an application service of the second application (for example, the game application 2, where programming languages used by the first application and the second application may be different) correspondingly generated based on the first application also includes the services 1 to 4. When a service (the service 4) of the second application is triggered, the second toolkit (the application toolkit 2) may be invoked, and the application toolkit 2 executes the triggered service 4.

In this case, in an implementable manner, if a toolkit service of the application toolkit 2 does not include the service 4, that is, the application toolkit 2 cannot provide the service 4 to the second application, a user cannot normally use the service 4 of the second application. This means that the developer needs to develop, on the multi-end application platform for the service 4, a service component configured to provide the service 4, and establish a communication channel between the service component and the application toolkit 2 during construction of the service component. A programming language used by the service component corresponding to the service 4 generated by the computer device by using the multi-end application platform is the same as that used by the second application. In this way, when the second application is constructed by using the application project file of the first application, the application toolkit 2, and the service component, the second application may be further deployed and installed on the computer device, so that when the computer device runs the second application, the second application can invoke the service component through the communication channel pre-established between the second toolkit and the service component, to normally use the service 4. In this case, the service component constructed by using the multi-end application platform is essentially equivalent to a service expansion of the second toolkit (for example, the application toolkit 2). In this way, the second toolkit on which service expansion is performed may be configured for normally providing the service 4 to the second application, so that service expansion of the second toolkit of the second application may be implemented in a form of a service component.

The technical solution of the present disclosure may be further applied to a service upgrade scenario of an application toolkit. For example, an application service of the second application is the services 1 to 4, and a toolkit service of the application toolkit 2 includes the services 1 to 4. In other words, the application service of the second application may be normally used. If the service 4 needs to be upgraded, a related service needs to be upgraded in the application toolkit 2. However, operations for service upgrade of the application toolkit 2 are complex. Therefore, a service component may be generated for the upgraded service 4. In this way, when the second application needs to use the service 4, the application toolkit 2 may invoke the service component, to use the upgraded service 4 provided by the service component. Therefore, service upgrade may be implemented in a form of a service component. In other words, a service component may be constructed for any component service, and when a multi-end application needs to use a component service, the component service may be implemented by using a corresponding service component in the multi-end application. This frees service use of the multi-end application from a limitation of a service that can be provided by an application toolkit of the multi-end application, and sustains the multi-end application development experience. For example, a required native service and expanded service may be customized and used in a multi-end application correspondingly constructed by using the first application.

The multi-end application may include applications in various formats, for example, a mini program application (that is, the foregoing mini program), an iOS application, and an Android application. In the technical solution of the present disclosure, when an application (the second application, for example, an application B) may be generated by using an application processing file (that is, the foregoing application project file) of another application (the first application), a service component for a service (a service X) is added to the application B, so that when the application B uses the service X, the service component may be invoked by using an application toolkit of the application B to execute the service X. Even if the application toolkit does not include the service X, service expansion of the application toolkit of the application B may be implemented by using the service component, so that the service X may be used in the application B in a plug-and-play manner. An application may be generated on the multi-end application platform based on an application processing file of another application. For ease of description, the technical solution of the present disclosure is described by using an example in which the application in the second format (for example, the iOS application) is generated based on the application in the first format (for example, the mini program application). In other words, the multi-end application platform may be a framework supporting development of the application in the second format (for example, the iOS application, that is, a multi-end application obtained through compilation by using a multi-end framework) by using native syntax (that is, a programming language for a mini program format) of the first format (for example, the mini program format). In other words, a mini program developer (that is, the foregoing developer) may develop a project file of a mini program once to obtain an application in the mini program format and an application in another format ( for example, an iOS application and an Android application) through compilation by using the multi-end framework in the multi-end application platform, thereby implementing multi-end development.

The multi-end application platform may be configured to develop the first application, or may be configured to develop the second application. The first application and the second application are in different formats. To be specific, the second application may be further generated by using the multi-end application platform (that is, the foregoing developer tool on which the multi-end framework is installed) based on the application processing file of the first application, the application toolkit that is provided by the multi-end application platform and that needs to be installed in the second application, and the service component generated by using the multi-end application platform. In this case, a service and application execution logic of the second application are determined by the application processing file of the first application (when the application processing file of the first application is configured as a target application processing file, the service and the application execution logic of the second application may be further determined by the target application processing file).

In other words, the second application in the embodiments of the present disclosure may invoke the service component by using the application toolkit. For example, the first application may be a mini program application, and the second application may be an iOS application. Each of the first application and the second application is an application that can implement a corresponding service by using a corresponding application toolkit (in this case, the application toolkit provides the service, or the application toolkit invokes a service component to provide the service).

When the first application is developed, a service component may be configured in an existing first application in a manner of developing the second application, to obtain a new first application, thereby implementing service expansion of the application toolkit of the first application. In this case, the second application may be an application in a same format as the first application, or may be an application in a different format from the first application. When the first application and the second application are in a same format, the programming language of the application toolkit of the first application is the same as the programming language of the application toolkit of the second application. When the first application and the second application are in different formats, the programming language of the application toolkit of the first application is different from the programming language of the application toolkit of the second application. Services provided by the application toolkit of the first application and the application toolkit of the second application may be the same or different.

When the multi-end application (for example, the second application) in the embodiments of the present disclosure obtains user data (for example, a user account and identity information) of a user and the like, a prompt interface or a pop-up window may be displayed in the corresponding application. The prompt interface or the pop-up window is configured for prompting a service object that data such as the user data is currently collected. Only after the user performs a confirmation operation on the prompt interface or the pop-up window (for example, the user confirms authorization by using the second application), an operation related to data obtaining starts to be performed; or if the user performs no confirmation operation on the prompt interface or the pop-up window is obtained, the process is ended. In addition, when the foregoing embodiments of the present disclosure are applied to a specific product or technology, a license or consent of the service object such as the user is required to be obtained, and collection, use, and processing of the related data are required to comply with related laws and regulations and standards of related countries and regions.

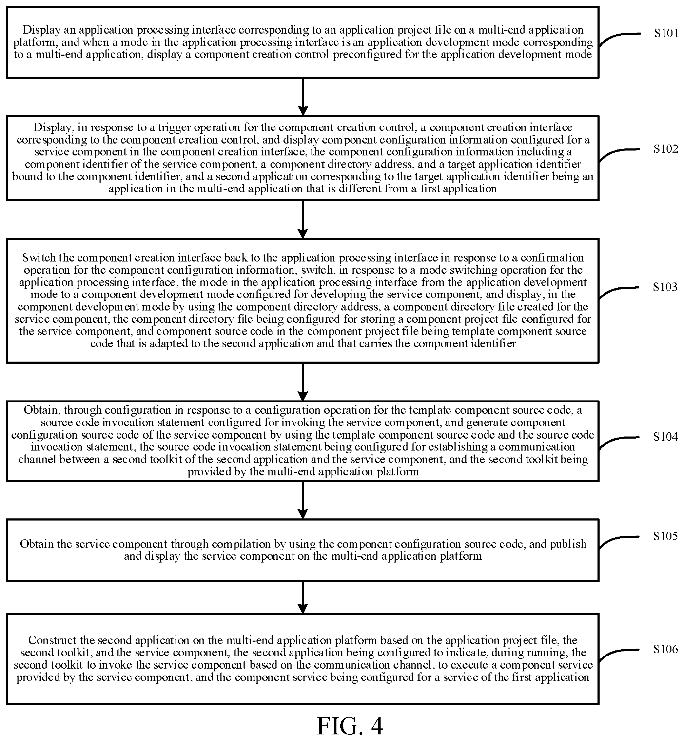

Further, referring to FIG. 4, FIG. 4 is a schematic flowchart of a data processing method based on a multi-end application platform according to an embodiment of the present disclosure. As shown in FIG. 4, the method may be performed by the foregoing computer device. The computer device may be a service terminal configured with the multi-end application platform. For example, the service terminal may be the service terminal 200a shown in FIG. 1. The multi-end application platform herein is configured to develop a multi-end application by using an application project file of a first application. The multi-end application may include the first application. As shown in FIG. 4, the method may specifically include the following operation S101 to operation S106.

S101: Display an application processing interface corresponding to the application project file on the multi-end application platform, and when a mode in the application processing interface is an application development mode corresponding to the multi-end application, display a component creation control preconfigured for the application development mode.

The multi-end application platform may be configured to develop the multi-end application. The multi-end application herein may include at least the first application currently developed by using the foregoing developer tool. In a process of developing the first application, a project file corresponding to the first application may be the foregoing application project file, and the application project file includes an application processing file obtained through encoding by using the foregoing developer tool. In other words, in this embodiment of the present disclosure, the first application may be specifically an application for which the application processing file has been developed (the first application may be obtained through compilation by using the application processing file).

In this embodiment of the present disclosure, for ease of distinguishing, another application subsequently developed on the multi-end application platform by using the application project file of the first application may be collectively referred to as a second application. In other words, the second application herein is essentially an application to be developed based on the application project file (which may be specifically, for example, the application processing file in the application project file) of the first application.

Specifically, a developer may open the application project file of the first application on a computer device on which the multi-end application platform is deployed. The application project file herein is specifically an application project file obtained by the developer through encoding when developing a program of the first application on the multi-end application platform (which may be specifically, for example, a developer tool on which a multi-end framework is installed). Further, the computer device may display, on the multi-end application platform, the application processing interface corresponding to the currently opened application project file of the first application. In an implementable manner, the application processing interface may be configured for displaying a mode selection region, so that the developer can select and display, in the mode selection region, the application development mode (that is, essentially a multi-end application mode corresponding to the multi-end application) configured for developing the second application.

In the application development mode, if an application toolkit (that is, a second toolkit) provided by the multi-end application platform for the second application may be configured for providing a corresponding service (for example, a service 1) to a user, the developer may construct the second application in the application processing interface by using the application project file of the first application and the application toolkit (that is, the second toolkit) provided by the multi-end application platform for the second application.

In some embodiments, in the application development mode, if the application toolkit (that is, the second toolkit) provided by the multi-end application platform for the second application cannot be configured for providing the corresponding service (for example, the service 4) to the user, the developer needs to additionally develop, in the application processing interface for a service (for example, the service 4) that cannot be currently provided by the second toolkit, a service component that can be dynamically inserted into the second application. In this way, the developer may subsequently further construct the second application by using the application project file of the first application, the application toolkit (that is, the second toolkit) provided by the multi-end application platform for the second application, and the service component, so that the second application can invoke the service component by using the second toolkit to provide the corresponding component service (for example, the service 4) to the user.

The application processing interface includes a project control (that is, a "project" that is displayed in a form of a control and that may be triggered by the developer, for example, the project 21a shown in FIG. 2). The developer may display a project list by touching the project control. The project list may include a component creation control (for example, a control displayed in a form of a control with a text "create a component" or "create a multi-end plug-in"). In some embodiments, the component creation control may be configured to create a service component for a service of the first application based on a currently opened project file (that is, the foregoing application project file) of the multi-end application (that is, the first application). In other words, in an implementable manner, the developer may create, under a project corresponding to the currently opened application project file, a service component of the first application that needs to be upgraded under the currently opened project. The first application that needs to be upgraded herein may be equivalent to a new first application (that is, the second application) reconstructed by performing service upgrade on the service of the first application by using the service component. In this case, the component creation control may be configured to create, for a service (for example, a service that needs to be upgraded) of the first application, a service component for the first application based on the currently opened project file (that is, the foregoing application project file) of the multi-end application (that is, the first application).

In some embodiments, in another implementable manner, when opening the application project file of the first application, the developer may trigger the project control configured to open the application project file, to display the project list under the project control (for example, each control in the project list may be displayed in a form of a pull-down list). In this way, the developer may flexibly create a service component that belongs to a current to-be-generated second application (a multi-end application) by using the component creation control that is displayed in the project list and that is preconfigured for the application development mode. This means that in this case, the component creation control may be configured to create, for a service (for example, the service 4) of the first application, a service component for another multi-end application (that is, another application to be generated by using the multi-end application platform) based on the currently opened project file (that is, the foregoing application project file) of the multi-end application (that is, the first application).

S102: Display, in response to a trigger operation for the component creation control, a component creation interface corresponding to the component creation control, and display component configuration information configured for the service component in the component creation interface, the component configuration information including a component identifier of the service component, a component directory address, and a target application identifier bound to the component identifier, and the second application corresponding to the target application identifier being an application in the multi-end application that is different from the first application.

The developer of the first application may configure related component configuration information in the component creation interface. The component creation interface herein may be configured for displaying the component configuration information of the to-be-created service component. The component configuration information may specifically include the component identifier of the service component, the component directory address, and the target application identifier bound to the component identifier. The component directory address herein may be a storage address configured for storing a component directory file of the service component in the project associated with the application project file of the first application (for example, the storage address may be an address of the application project file of the first application). In some embodiments, the component directory address herein may alternatively be another storage address customized and selected by the developer for storing the component directory file of the service component.

The application project file herein is a file related to the application project of the first application. For example, the application project file may include the application processing file in which data such as execution logic of the first application is developed, and may further include a component related file of the service component developed for the second application corresponding to the first application (for example, a component project file in which execution logic of the service component is developed, where the component project file is a file related to a component project of the service component). Both the application project and the component project herein are projects created by the developer by using the multi-end application platform.

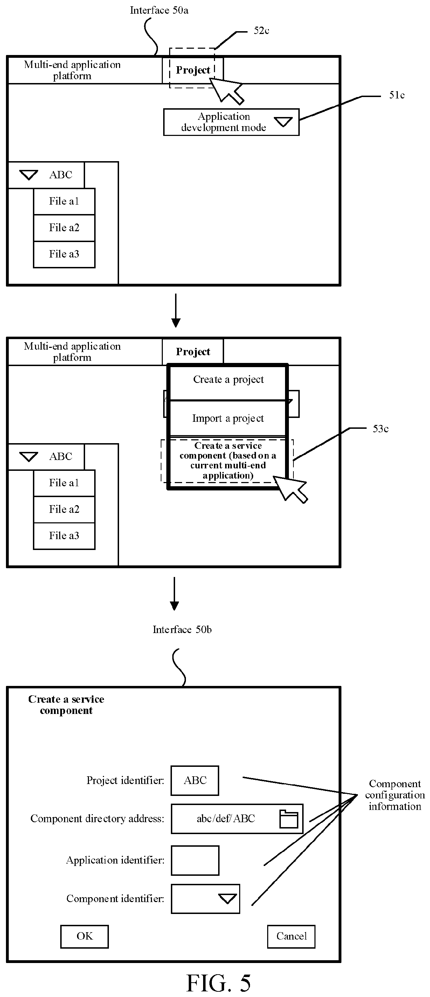

For example, as shown in FIG. 5, FIG. 5 is a schematic diagram of an application processing interface according to an embodiment of the present disclosure. The application processing interface of the first application may be an interface 50a shown in FIG. 5. The interface 50a herein may be specifically the interface 1 in the example in FIG. 2. As shown in FIG. 5, directory information of the application project file of the first application is displayed in the application processing interface (for example, the interface 50a). For example, the directory information herein may include a project identifier (for example, ABC shown in FIG. 5) corresponding to the project (that is, the application project) of the first application. In the directory information, the application processing file of the first application under the application project file may include a file a1, a file a2, and a file a3 shown in FIG. 5.

In this embodiment of the present disclosure, the developer may trigger (for example, click) the directory information (for example, the project identifier) to view a corresponding application processing file, and may click an application project file in the application processing file to view specific content (for example, specific execution logic) in the application project file. For example, the developer may click the file a1 in the interface 50a, to display content in the file a1 on the multi-end application platform.

In addition, as shown in FIG. 5, the application processing interface (for example, the interface 50a) further includes the mode selection region capable of helping the developer flexibly perform mode switching. For example, the developer may open the application project file of the first application by using the computer device, to enter the multi-end application mode (for example, an application development mode 51c shown in FIG. 5). This means that in this case, the computer device may configure and display, in the mode selection region in the interface 50a, the mode in the application processing interface as the application development mode 51c configured for developing another multi-end application (that is, the second application), that is, the developer may further develop, in the application development mode, another multi-end application corresponding to the first application.

When the first application is a mini program application, a multi-end application corresponding to the first application may be an iOS application or the like. In addition, as shown in FIG. 5, the project control deployed and displayed in the application processing interface (for example, the interface 50a) may be a project 52c shown in FIG. 5. The developer may further touch the project control to display the project list including at least one control in a manner of a pull-down list. The project list may include a control (that is, a project creation control) configured to create a project (for example, create an application project), a control (that is, a project import control) configured to import a project (for example, import an existing application project), and the control 53c (that is, the component creation control) configured to create a multi-end plug-in based on a current multi-end application (that is, create a service component based on the current multi-end application). In other words, the component creation control herein may be configured as a control configured to create a multi-end plug-in.

In some embodiments, in another implementable manner, the component creation control herein may alternatively be configured as a control configured to create, when an application project file of a corresponding project (that is, a corresponding application project) is opened based on a current multi-end application, a multi-end plug-in under the currently opened project. In other words, in this embodiment of the present disclosure, a service component belonging to (that is, stored in) the currently opened project may be created. This may also be understood as that in this embodiment of the present disclosure, the service component belonging to the current to-be-generated second application (a multi-end application) may be created by using the control 53c (that is, the component creation control) configured to create a service component. As shown in FIG. 5, the developer may further touch the component creation control (for example, the control 53c configured to create a service component in FIG. 5) in the interface 50a, to display the component creation interface (for example, an interface 50b shown in FIG. 5, where the interface 50b herein may be the interface 2 in the example in FIG. 2) corresponding to the component creation control. As shown in FIG. 5, the component creation interface may be configured for creating the service component. Specifically, the developer may fill in the component configuration information of the to-be-created service component by using the component creation interface. For example, as shown in FIG. 5, the component configuration information herein may specifically include the component identifier (for example, a component identifier 23a in the example in FIG. 2) of the to-be-created service component, a project identifier (that is, a project identifier associated with the service component) of a project (for example, the component project) corresponding to the component project file that needs to be configured for the to-be-created service component, an application identifier (that is, an application identifier associated with the service component) of another multi-end application (that is, the second application to which the to-be-created service component belongs) that needs to be bound to the to-be-created service component, and the component directory address (that is, the component directory address associated with the service component, for example, the component directory address in the example in FIG. 2) of the component directory file to which the component project file that needs to be configured for the to-be-created service component belongs.

In an implementable manner, the component directory address may be specifically an address associated with the application project file of the first application, that is, an address of the application project of the first application. In other words, in this case, the application processing file of the first application and a component related file of a service component created for the second application for a component service are under a same component directory address (for example, the component directory address carrying the project identifier shown in FIG. 5). For example, in this embodiment of the present disclosure, based on an address of an application project file of a currently opened application (for example, the first application), the address of the application project file may be automatically entered at a project address (that is, the component directory address) shown in FIG. 5, so that the component related file of the to-be-created service component may be subsequently further stored under the address of the application project file of the currently opened application (for example, the first application) (for example, the component project file whose project identifier is "ABC" may be further stored under the component directory address).

In some embodiments, the project identifier (for example, ABC) and the component directory address (for example, ABC/def/ABC) in the component creation interface (for example, the interface 50b shown in FIG. 5) may be automatically filled in by the computer device. For example, when outputting the component creation interface (for example, the interface 50b), the computer device may automatically obtain a project identifier of the currently opened project (for example, the application project corresponding to the application project file of the first application), and further obtain an address of the application project file of the first application (for example, an address of a directory file to which the application project file of the first application belongs) by using the project identifier of the application project of the first application, for automatic filling in the interface 50b.

In some embodiments, in another implementable manner, an address (for example, the component directory address shown in FIG. 5) of the component directory file configured for storing the component project file may be completely unrelated to the address of the application project file. For example, the component directory address herein may be an address of the component directory file configured for storing the component project file of the service component, which is flexibly set or selected by the developer on the computer device. As can be seen, the computer device in this embodiment of the present disclosure can quickly access, by using the component directory address herein, the component directory file configured for the service component, and further can quickly access the component project file of the service component based on the project address that is carried in the component directory address and that is configured for uniquely identifying the component project of the service component.

As shown in FIG. 5, the application identifier (for example, the target application identifier shown in FIG. 2) in the interface 50b may be flexibly configured by the developer participating in developing the first application, or may be automatically obtained and preconfigured for the second application. In other words, the application identifier is an application identifier configured for the second application to subsequently generate the second application (that is, another multi-end application) based on the first application (that is, based on the current multi-end application). In some embodiments, the application identifier may alternatively be automatically generated when the developer opens the application processing interface of the first application on the multi-end application platform. As can be seen, the computer device may automatically fill in the application identifier generated when the application processing interface of the first application is opened on the multi-end application platform, or may automatically fill in, when the developer participating in developing the first application already pre-configures the application identifier of the second application, the application identifier preconfigured previously.

The component identifier may be manually filled in by the developer of the first application, or may be obtained by the developer of the first application from a created service component. For example, a service component A has been created previously. In this case, a component directory address of the service component A may include an address of a component directory file created for the service component A. When the component directory file created for the service component A previously is accessed by using the component directory address, a component identifier configured for the service component A previously may be further obtained by parsing the component directory file. Therefore, an existing component identifier may be obtained by parsing the component directory file corresponding to the component directory address of the first application, and the developer of the first application may select the existing component identifier to create a new service component, that is, create a new component directory file (covering the original component directory file), or may configure a brand new component identifier to create a new component directory file.

S103: Switch the component creation interface back to the application processing interface in response to a confirmation operation for the component configuration information, switch, in response to a mode switching operation for the application processing interface, the mode in the application processing interface from the application development mode to a component development mode configured for developing the service component, and display, in the component development mode by using the component directory address, the component directory file created for the service component, the component directory file being configured for storing the component project file configured for the service component, and component source code in the component project file being template component source code that is adapted to the second application and that carries the component identifier.

In a process of performing operation S103, the computer device may create, for the to-be-created service component based on the project identifier and the component directory address that are configured in the component creation interface, the component related file associated with the service component corresponding to the component identifier. In this way, when the computer device switches the component creation interface back to the application processing interface, the component related file created for the service component may be further displayed by using the component directory address in the application processing interface of the first application in the component development mode (for example, a multi-end plug-in mode, that is, a mode in which plug-in development is performed for another multi-end application). For example, the component related file herein may specifically include the component directory file created for the service component. The component directory file is a file in the component related file created for the service component. The component directory file may specifically include the component project file of the service component. The component source code in the component project file herein is the template component source code that is adapted to the second application (specifically adapted to a programming language in a running environment corresponding to the second application) and that carries the component identifier. The component project file may be configured for defining an instantiation operation for the service component (for example, a registration statement and an initialization statement for the service component). In other words, the template component source code in the component project file may specifically include template component registration source code and template component initialization source code for the service component. Therefore, the developer of the first application may further adaptively configure the template component registration source code and the template component initialization source code based on the template component source code.

To be specific, in the component development mode, directory information of the component related file created for the service component may be displayed in the application processing interface, and a component related file may be opened by using the directory information (for example, an address configured for storing each directory file created for service components adapted to different formats, that is, the foregoing component directory address) (for example, the component directory file corresponding to the directory information may be opened by using the component directory address, and the component project file may be further opened under the component directory file). In other words, in this embodiment of the present disclosure, one or more directory files may be stored under the directory information of the component directory file corresponding to the component directory address.

For example, in an implementable manner, the component directory file may include directory files that are automatically created for the service component and that are configured for developing service components in different formats. For example, the component directory file may specifically include a directory file (for example, referred to as a first directory file) configured for developing a service component in a second format (for example, an iOS format), and a directory file (for example, referred to as a second directory file) that is created for the service component and that is configured for developing a service component in a third format (for example, an Android format). The first directory file includes a component project file (for example, referred to as a component project file 1) configured for development in the second format (for example, the iOS format), and the second directory file includes another component project file (for example, referred to as a component project file 2) configured for development in the third format (for example, the Android format). Component source code (source code for short) in the component project file 1 is template component source code configured for the second format (for example, the iOS format). For example, a programming language used by the source code in the component project file 1 is a programming language 1, that is, native code for the second format (for example, the iOS format). Component source code (source code for short) in the component project file 2 is template component source code configured for the third format (for example, the Android format). For example, a programming language used by the source code in the component project file 2 is a programming language 2, that is, native code for the third format (for example, the Android format). In this case, an example in which the second application is an application in the second format (for example, an iOS application) is used. Therefore, the component directory file and the component project file that are mentioned are both files in the second format (for example, the iOS format).

In some embodiments, in another implementable manner, in this embodiment of the present disclosure, different component project files configured for developing service components in different formats may be automatically created for the service component. For example, a component directory file (for example, referred to as a first directory file) may be configured for developing a service component in a second format (for example, an iOS format), and another directory file (for example, referred to as a second directory file) may be configured for development in a third format (for example, an Android format). In this case, addresses (that is, component directory addresses) of component project files configured for developing service components in different formats may be the same or may be different. This is not limited herein.

Similarly, if the developed second application may be an application in a first format (for example, a mini program application), the component directory file may include a directory file (that is, a component directory file) configured for developing a service component in the first format (for example, a mini program format), and the component directory file may include a component project file configured for development in the first format (for example, the mini program format). Component source code (source code for short) in the component project file is template component source code in the first format (for example, the mini program format). For example, a programming language used by the source code in the component project file may be a programming language 3, that is, native code for the first format (for example, the mini program format).

In addition, the multi-end application platform may automatically switch the component creation interface back to the application processing interface in response to the confirmation operation for the component configuration information, automatically switch, in the mode selection region in the application processing interface, the application development mode to the component development mode, and display, in the component development mode, the component directory file created for the service component. In this case, the application processing file of the first application can still be viewed. The mode switching operation herein may be automatically triggered by the multi-end application platform, or may be selectively triggered by the developer in the mode selection region on the multi-end application platform.

In some embodiments, a component debugging region may be further displayed in the component development mode. The component debugging region may be configured for debugging a developed service component. The component debugging region may include a component loading control and a component invocation control. For a specific process of performing component debugging on the service component by using the component debugging region, refer to the following related descriptions.

S104: Obtain, through configuration in response to a configuration operation for the template component source code, a source code invocation statement configured for invoking the service component, and generate component configuration source code of the service component by using the template component source code and the source code invocation statement, the source code invocation statement being configured for establishing a communication channel between a second toolkit of the second application and the service component, and the second toolkit being provided by the multi-end application platform.

In this embodiment of the present disclosure, before performing operation S104, the computer device may further perform the following operation: The computer device may display the template component source code in response to a file opening operation for the component project file, so that operation S104 may be further performed subsequently.

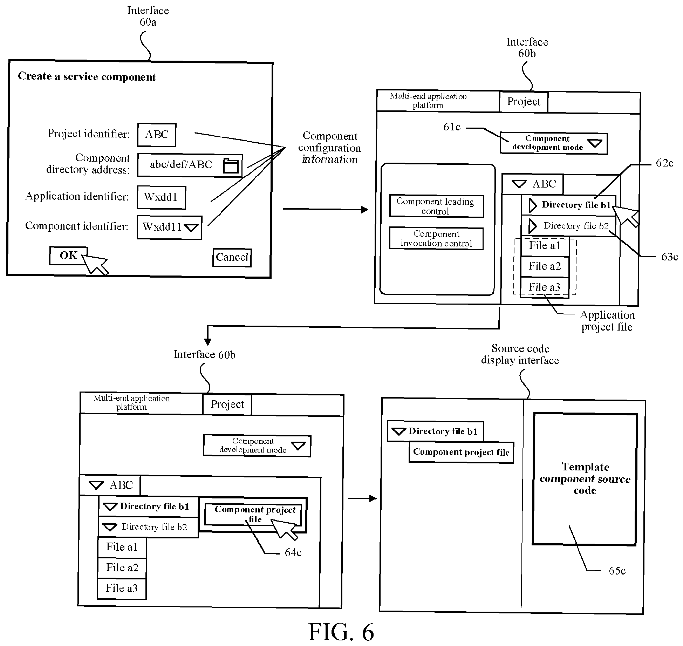

As shown in FIG. 6, FIG. 6 is a schematic diagram of a process of displaying template component source code according to an embodiment of the present disclosure. The development personnel of the first application may configure the component configuration information of the service component in the component creation interface (for example, an interface 60a shown in FIG. 6, where the interface 60a herein may be the interface 50b shown in FIG. 5). For example, the component configuration information herein may include a project identifier (for example, "ABC"), a component directory address (for example, "ABC/def/ABC"), an application identifier (for example, "Wxdd1"), and a component identifier (for example, "Wxdd11") shown in FIG. 6. Then, the developer may click an "OK" control in the interface 60a, so that the multi-end application platform switches the component creation interface back to the application processing interface (for example, an interface 60b, where the interface 60b may be the interface 50a shown in FIG. 5), and switch, in the mode selection region in the application processing interface, the mode in the application processing interface from the application development mode to a component development mode 61c shown in FIG. 6.

The address of the application project file of the first application and the component directory file of the service component may be a same address, for example, may both be a project address corresponding to a same development project (for example, an application project file obtained by developing the application project of the first application). Specifically, as shown in FIG. 6, in the component development mode 61c, a component directory file 62c (for example, a directory file b1 shown in FIG. 6) and a component directory file 63c (for example, a directory file b2 shown in FIG. 6) of the service component that are determined by using the component directory address, and the application project file of the first application are displayed in the application processing interface (for example, the interface 60b). For example, the application processing file of the first application in the application project file shown in FIG. 6 may include the file a1, the file a2, and the file a3. For another example, the component directory file displayed in the application processing interface may specifically include a first directory file 62c (a directory file b1) created for a service component in the second format and a second directory file 63c (a directory file b2) created for a service component in the third format.

When a format of a service component that needs to be developed for a component service is the second format, the directory file b1 shown in FIG. 6 may be clicked to display a component project file 64c deployed in the directory file b1. Then, as shown in FIG. 6, the developer may further click the component project file 64c in the interface 60b to display, in a source code display interface of the multi-end application platform, template component source code 65c that is adapted to the second format of the second application and that carries a component identifier of the service component.

The interface 60b shown in FIG. 6 may further include a component loading control configured to simulate loading of the service component and a component invocation control configured to simulate debugging of the service component. The component loading control and the component invocation control may be configured to debug, in a process of simulating loading and debugging of the service component by using a test component, component configuration source code configured for constructing the service component. The component configuration source code is generated by using the template component source code 65c shown in FIG. 6 and a source code invocation statement obtained by performing related invocation configuration on the template component source code 65c.

The computer device may obtain, in response to a configuration operation for the template component source code 65c, the source code invocation statement associated with the template component source code 65c, and obtain the component configuration source code of the service component based on the template component source code 65c and the source code invocation statement.

The source code invocation statement may be configured for establishing a communication channel between the second toolkit (that is, an application toolkit of the second application) and the service component.

The template component source code 65c may specifically include template component registration source code and template component initialization source code for the service component. The template component registration source code herein may be configured for performing component registration. For example, component registration herein may specifically include component object registration, component identifier registration, service execution method registration, and the like. To be specific, the template component registration source code in the template component source code may be configured for defining a format statement related to service registration that is involved in a component registration process. For example, the template component registration source code may specifically include a related template statement configured for defining the component identifier of the service component, and a related template statement configured for defining a service execution method of a component service provided by the service component. Specifically, the developer of the first application may perform related configuration for the template component registration source code, for example, configure the component identifier as a component identifier of the current to-be-created service component, or configure a method name and a parameter name of the service execution method.

In addition, the template component initialization source code may be configured for performing component initialization, and may be invoked after the template component registration source code is executed. To be specific, the computer device may obtain, in response to a registration configuration operation for the template component registration source code, target component registration source code configured for registering the service component. The target component registration source code may be configured for further invoking the template component initialization source code after component registration of the service component is completed by using the component identifier in the template component source code. Further, the computer device may configure the target component registration source code configured for invoking the template component initialization source code as the source code invocation statement.

Component initialization may specifically include component object initialization, jump link (a jump link registered for a component object, where the jump link is a link provided by the service component to the application toolkit for invoking the service component) initialization, universal link (a universal link registered for the component object, where the universal link is a link provided by the service component to the application toolkit for invoking the service component) initialization, and the like. Specific initialization data may be determined based on specific template component initialization source code. In addition, a template (for example, a template component initialization template) corresponding to the template component initialization source code is configured in advance by the developer of the multi-end application platform for a corresponding format (for example, the second format).

Therefore, obtaining, in response to the configuration operation for the template component source code, the source code invocation statement associated with the template component source code may be: obtaining the target component registration source code of the service component in response to a registration source code configuration operation for the template component registration source code, so as to determine the source code invocation statement based on the target component registration source code.

To be specific, the computer device may further perform, based on the template component registration source code, source code configuration for a specific service that the service component needs to provide, use the template component registration source code subjected to source code configuration as the target component registration source code, and use the target component registration source code adapted to the service component as the source code invocation statement. In this case, the component configuration source code may specifically include the template component initialization source code and the target component registration source code.

The multi-end application platform adds a service identifier configured by the developer of the first application to the template component source code generated based on the component configuration information of the service component, that is, automatically generates a component identifier registration statement for the service identifier. In this case, the developer of the first application may adaptively configure a registration statement for the service execution method for the service component, for example, configure, based on a method registration statement in the template component source code, a method registration statement applicable to the service component for a specified method name and method parameter. For example, the method registration statement in the template component source code includes a method declaration statement "WEAPP_EXPORT_PLUGIN_METHOD_SYNC (method)", where "method" is a method name of a declared service execution method. In this case, the developer of the first application may configure a method declaration statement for the service execution method for the service component based on a format of the method declaration statement, for example, "WEAPP_EXPORT_PLUGIN_method_SYVC (mySyncFunc)", where "mySyncFunc" is a method name of the service execution method for the service component. For another example, the method registration statement in the template component source code includes a method definition statement, and the method definition statement includes that parameter names of method parameters required by the template service execution method are "a" and "b". In this case, the developer of the first application may configure a method parameter required by the service execution method for the service component based on a format of the method definition statement. For example, the parameter names "a" and "b" are configured as "name" and "age". The registration source code configuration operation is not limited herein, and is determined based on a specific development process of the service component. For example, the service component is a payment component, and the service execution method is used to define specific payment logic.

In some embodiments, an object name of the component object may be adaptively configured. A configuration principle is the same as a configuration principle of the service execution method. After the method name of the service execution method (or the object name of the component object) is configured, all places related to the method name of the service execution method (or the object name of the component object) need to be uniformly configured in all component related files.

In other words, the multi-end application platform may provide the template component source code, and the developer of the first application develops the native code of the service component based on the template component source code. This improves convenience and efficiency of development by the developer of the first application.

The template component source code in the component project file is exemplary source code configured for establishing the communication channel between the second toolkit and the service component. For example, when the computer device simulates loading of the service component (simulates loading of the test component of the service component in this case) by using the application toolkit (that is, the second toolkit) of the second application, the service component performs component registration by using the template component registration source code in the template component source code, and invokes the template component initialization source code in the template component source code to perform component initialization after component registration. When component initialization is completed, instantiation of the service component is completed, and an instantiated component object is obtained (that is, object instantiation is completed only when the service component registers the object and completes initialization). In this case, the service component returns the instantiated component object to the second toolkit. After the second toolkit obtains the instantiated component object, construction of the communication channel between the second toolkit and the service component is completed. In this case, the second application may use a method exposed by the instantiated component object (that is, an instantiated object), so that the service component may perform the service execution method to implement the component service.

In other words, the target component registration source code includes an object registration statement, the component identifier registration statement, and the method registration statement (a registration operation in the target component registration source code is not limited herein) that are configured for the service component. The target component registration source code may be configured for performing component registration, so that after component registration, the template component initialization source code may be further invoked to perform component initialization.

For example, an example in which the template component source code is in the second format (such as the iOS format) is used. The template component source code generated based on the component configuration information in FIG. 6 may include the template component registration source code and the template component initialization source code. The template component registration source code may be:

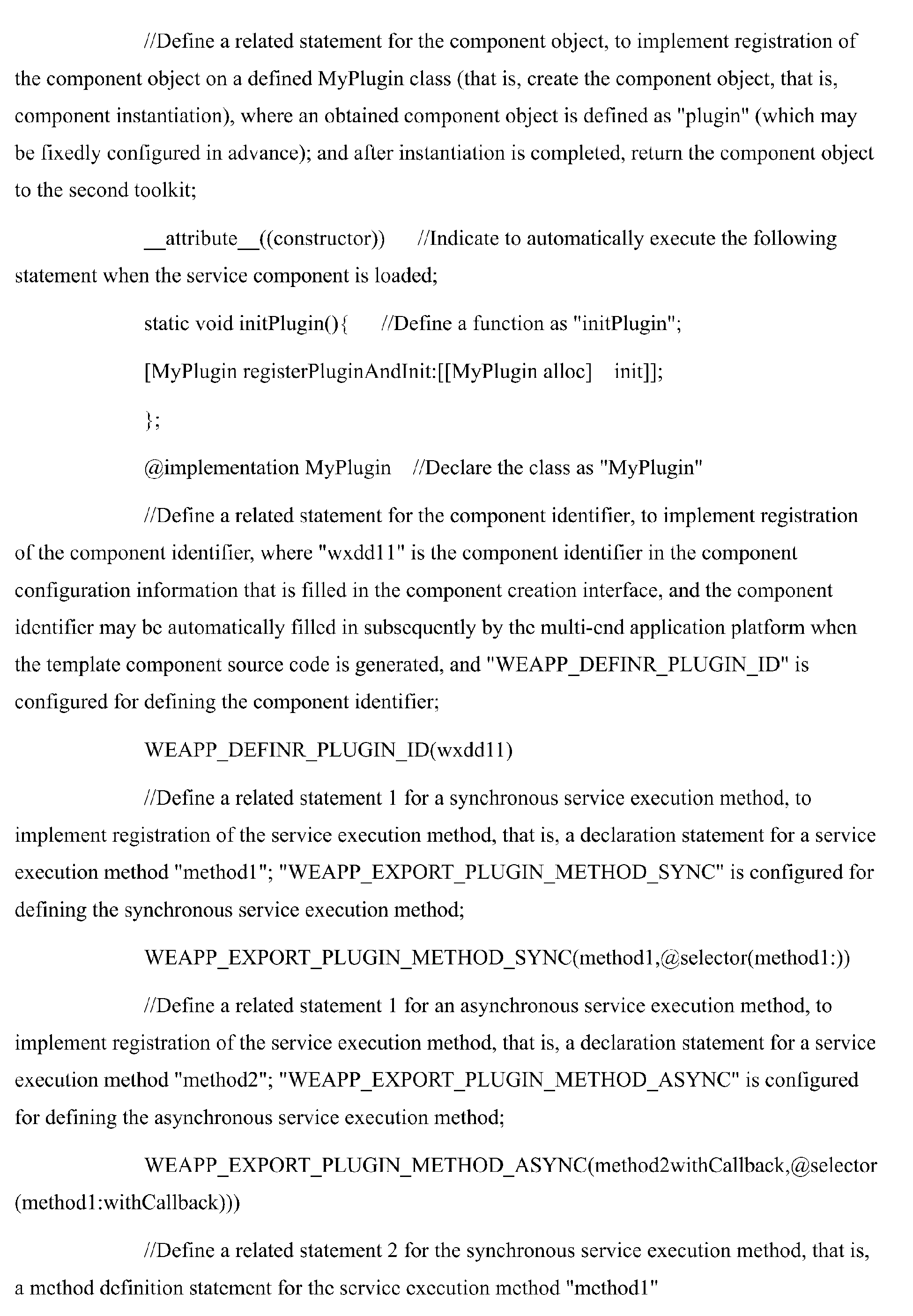

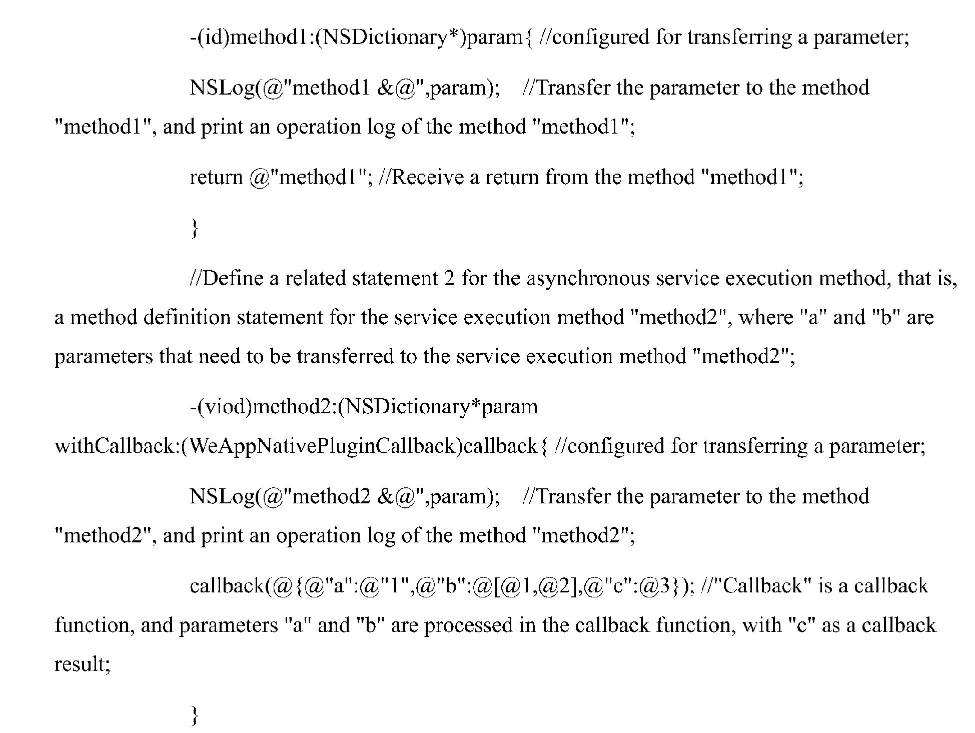

It can be learned from the foregoing descriptions that the configuration operation for the template component source code may include configuration of the method name in the declaration statement for the service execution method, and configuration of the method parameter in the method definition statement for the service execution method. For example, the service execution method for the service component includes a method 1 and a method 2. The method 1 is the synchronous service execution method, with a method name of "mySyncFunc". The method 2 is the asynchronous service execution method, with a method name of "myAsyncFunc".

Therefore, the configured target component registration source code is:

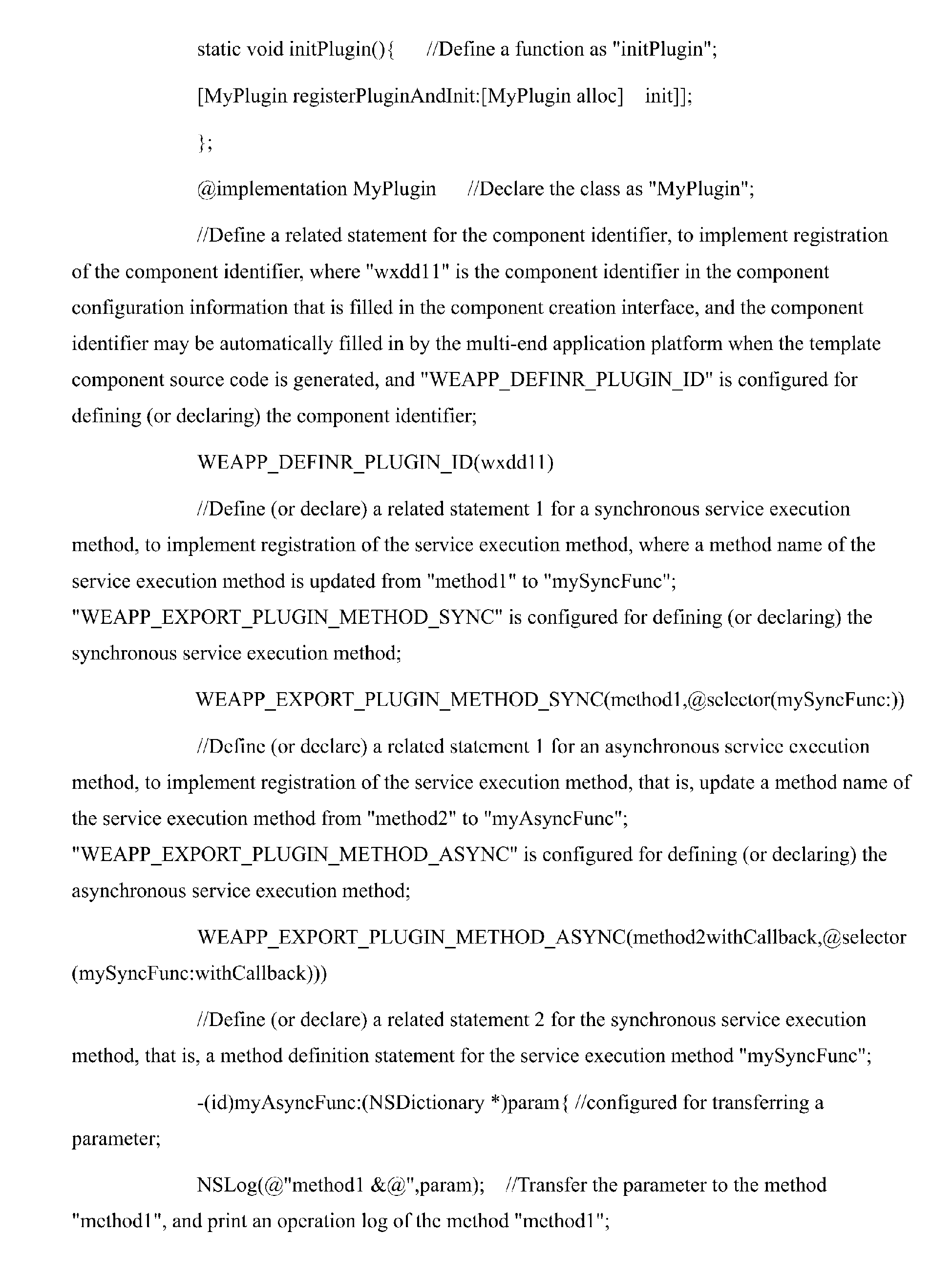

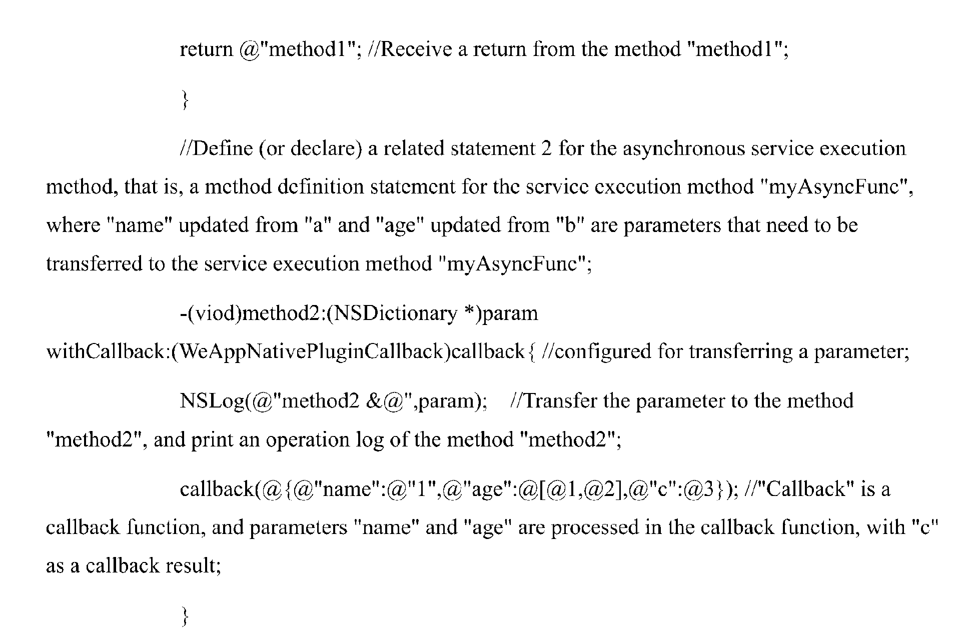

A macro definition for declaring the synchronous service execution method is:
WEAPP_EXPORT_PLUGIN_METHOD_SYNC(methodName,methodSelector)

The parameter "methodName" is the method name of the service execution method, and is a mandatory parameter. The second application may invoke the service execution method by using a second component processing method (for example, pluginInstance.methodName). The parameter "methodSelector" is a defined registration method (also referred to as an instantiation method). An input parameter "NSDictionary" of the synchronous service execution method is a non-mandatory parameter, and is a parameter transferred by the second application by using the second component processing method. An output parameter of the synchronous service execution method is a non-mandatory parameter, and is a result obtained by the service component by invoking the service execution method to execute the component service.

A macro definition for declaring the asynchronous service execution method is:
WEAPP_EXPORT_PLUGIN_METHOD_ASYNC(methodName,methodSelector)

The parameter "methodName" is the method name of the service execution method, and is a mandatory parameter. The second application may invoke the service execution method by using the second component processing method (for example, pluginInstance.methodName, where "pluginInstance" is a defined component object). The parameter "methodSelector" is a defined registration method (also referred to as an instantiation method). An input parameter 1 "NSDictionary" of the asynchronous service execution method is a non-mandatory parameter, and is a 1^{st} parameter transferred by the second application by using the second component processing method. An input parameter 2 "WeAppNativePluginCallback" of the asynchronous service execution method is a non-mandatory parameter, and is a 2^{nd} parameter transferred by the second application by using the second component processing method. A result obtained by the service component by invoking the service execution method to execute the component service may be called back to the second application by using the input parameter 2 as callback for the input parameter 2.

The template component initialization source code may be:

```
            //configured for component initialization, and triggered and invoked after the target
 component registration source code is executed;
            //Define a related statement for component object initialization, to initialize the
 registered component object;
            -(viod)initPlugin {
            NSLog(@"initPlugin"); //Output an initialization log of "initPlugin";
            }
```

In some embodiments, when the component object is initialized, a proxy method for the service component may be further registered and initialized, for example, for enabling service execution of the service component or maintaining service execution of the service component. An initialization operation in the template component initialization source code is not limited herein. To be specific, the template component initialization source code may be:

```
            -(viod)initPlugin {
            NSLog(@"initPlugin");
            [self registerAppDelegateMethod:@selector(application:openURL:options:)];
 //Register and initialize a link "openURL" configured for enabling the service component through
 an entry "registerAppDelegateMethod" of the component object;
            [self
 registerAppDelegateMethod:@selector(application:continueUserActivity:restorationHandler:)];
 //Register and initialize a mechanism "continueUserActivity" through the entry
 "registerAppDelegateMethod" of the component object, to maintain execution of the component
 service;
            }
```

```
   //Define a related statement for initialization of a jump link "url scheme" registered
 for the component object;
            -(viod)application:(UIApplicaiton *)app openURL:(NSURL *)url
 options:(NSDictionary<UIApplicationOpenURLOptionsKey,id> *)options{//configured for
 processing the link "openURL", that is, when the service component is invoked by using "url
 scheme", call back to this method, for detecting a transferred service parameter and a callback
 result;
            NSLog(@"url scheme");//Output an initialization log of "url scheme";
    }
```

```
     //Define a related statement for initialization of a universal link "universal link"
 registered for the component object;
            -(viod)application:(UIApplicaiton *)application
 continueUserActivaty:(NSDictionary *)userActivity
 restorationHandler:(void(^)(NSArray<id<UIUserActivityRestoring>>*__nullable
          restorableObjects))restorationHandler{//configured for processing the mechanism
 "continueUserActivity",that is, when the service component is invoked by using "universal link",
 call back to this method, for detecting a transferred service parameter and a callback result;
  NSLog(@"universal link");//Output an initialization log of "universal link";
 }
```

In some embodiments, the developer of the first application further needs to define execution logic of the component service corresponding to the service component, that is, a specific execution process of the service execution method for the component service. Therefore, determining the component configuration source code may be: obtaining, in response to an execution method configuration operation for the component service, the service execution method configured for the component service; and obtaining the component configuration source code of the service component based on the template component initialization source code, the source code invocation statement, and the service execution method. When the component source code in the component project file 1 is the template component source code for the second format (for example, the iOS format), a programming language used by the service execution method configured in the first directory file is the programming language 1, that is, the native code for the second format (for example, the iOS format). The component source code in the component project file 2 is the template component source code for the third format (for example, the Android format), and a programming language used by the service execution method configured in the second component directory file is the programming language 2, that is, the native code for the third format (for example, the Android format). Similarly, if the component project file includes the template component source code for the first format (for example, the mini program format), a programming language used by a service execution method configured in a corresponding component directory file is the programming language 3, that is, the native code for the first format (for example, the mini program format).

The template component initialization source code and the source code invocation statement may be in a same component project file as the service execution method, or may be in a different component project file from the service execution method. When the communication channel between the second toolkit and the service component is established by using the template component initialization source code and the source code invocation statement, the second toolkit may indicate the service component through the communication channel, to invoke the service execution method to execute the component service.

S105: Obtain the service component through compilation by using the component configuration source code, and publish and display the service component on the multi-end application platform.

A component construction control in the component development mode is displayed in the application processing interface. The component construction control includes component construction controls for different formats, for example, a component construction control for the second format (for example, the iOS format) (for example, a "construct a format-1 component" control) and a component construction control for the third format (for example, the Android format) (for example, a "construct a format-2 component" control). Similarly, the component construction control may further include a component construction control for the first format (for example, the mini program format) (for example, a "construct a format-3 component" control). When a component construction control for a format is triggered, a service component in the corresponding format is constructed based on component configuration source code in a component directory file corresponding to the format. For example, when the component construction control for the iOS format is triggered, component configuration source code that is iOS native code is obtained from a directory file corresponding to the iOS format, and a service component in the iOS format is constructed based on the component configuration source code that is the iOS native code. The service component in the iOS format is configured for installation in the second application in the iOS format.

After obtaining the component configuration source code and before performing operation S105, the computer device may first debug the component configuration source code configured for constructing the test component, and after completing debugging the test component (the test component is a component that is generated by using the component configuration source code in the test process and that is configured to simulate the service component), construct the service component based on the template component initialization source code, the source code invocation statement, and the service execution method in response to the trigger operation for the component construction control.

The application processing interface displays a debugging statement construction control associated with the component development mode (that is, a debugging statement construction control in the component development mode), and the component debugging region in the component development mode. The component debugging region may include the component loading control and the component invocation control.

Therefore, the computer device may generate, on the multi-end application platform in response to a trigger operation for the debugging statement construction control, component debugging source code configured for performing component debugging on the component configuration source code. Further, the computer device may construct, in response to a trigger operation for the component loading control, the test component by using the component configuration source code, and indicate, in a component debugging program corresponding to the component debugging region based on the component debugging source code, the test component to perform component instantiation by using the component configuration source code, so that a test communication channel between the component debugging program and the test component may be obtained when component instantiation is completed. The test communication channel is configured for debugging the test component. The component debugging program is determined by the second toolkit provided by the multi-end application platform for the component debugging source code.

The component debugging source code may be configured for invoking the component configuration source code, to implement component instantiation of the service component. Component instantiation (that is, a creation process of the component object) of the service component includes component registration (including an operation in the creation process of the component object, that is, creating the component object, that is, creating a component instance) and component initialization (including an operation in the creation process of the component object, that is, initializing the component object, that is, initializing the component instance). In other words, an entire process of component instantiation may be completed by using the template component initialization source code in the component configuration source code and the source code invocation statement.

When it is determined that the component configuration source code needs to be debugged, the test component is first constructed, and then the component debugging source code is executed by using the component debugging program corresponding to the component debugging region, to indicate the test component to perform component instantiation. After performing component instantiation, the test component returns the component object (i.e., the instantiated component object, that is, information returned by the component object defined in the target component registration source code after instantiation, where the returned information may be configured as a fixed parameter, for example, "plugin") of the test component. When the component debugging program receives the instantiated component object, establishment of the test communication channel between the component debugging program and the test component is completed. The test communication channel may be configured for data exchange between the component debugging program and the test component.

The indicating, based on the component debugging source code, the test component to perform component instantiation by using the component configuration source code may be: loading the test component based on the component debugging source code in the component debugging program, and indicating the test component to invoke the source code invocation statement to perform component registration and invoke the template component initialization source code to perform component initialization after component registration. Component initialization herein is the foregoing component instantiation. In other words, the component debugging program loads the test component, triggers execution of the source code invocation statement when loading the test component, to implement component registration, and further triggers execution of template component initialization source code, to implement component initialization. When the test communication channel is established, debugging based on the source code invocation statement and the template component initialization source code is completed. In other words, in this case, the test component is successfully loaded.

The component configuration source code includes the service execution method for the component service, and the component debugging program may invoke the service execution method by using the test component, to determine whether the service execution method is correctly configured.

The component debugging region includes the component invocation control. The computer device on which the multi-end application platform is deployed may (invoke the component debugging program to) obtain a test service parameter configured for invoking the service execution method from the component debugging source code in response to a trigger operation for the component invocation control; transfer, in the component debugging program, the test service parameter to the test component by using a test communication relationship indicated by the established test communication channel, so that the test component executes the component service based on the test service parameter, to obtain a test execution result corresponding to the component service; and when the test execution result indicates a test success, may determine that component debugging of the test component is completed. In other words, in this embodiment of the present disclosure, when it is determined that the test execution result is correct, it may be determined that debugging of the test component is completed. In other words, the service execution method is correct, and the service component can be constructed based on the component configuration source code.

The component debugging source code (that is, a component debugging method) may be:

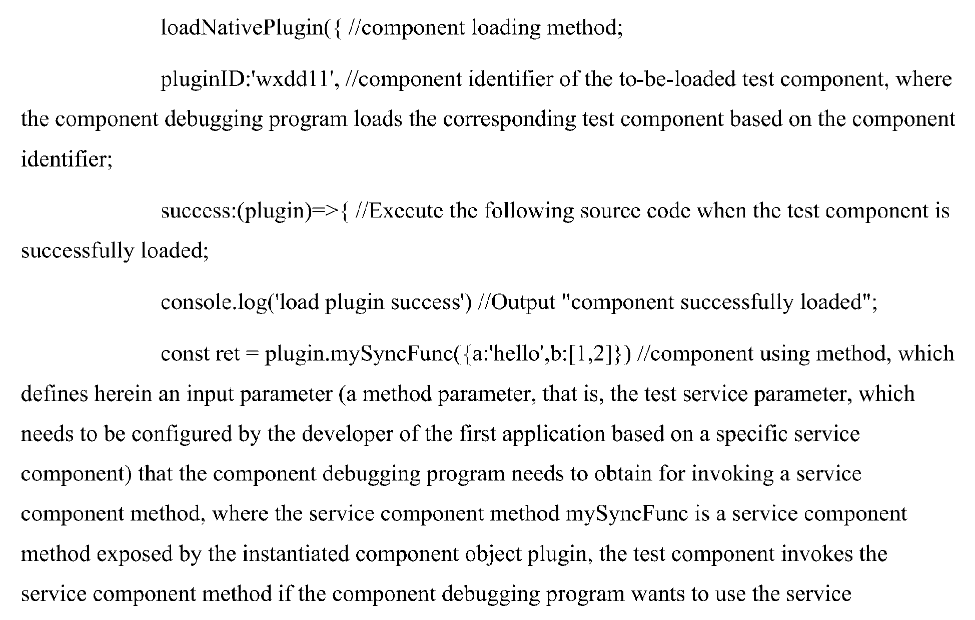

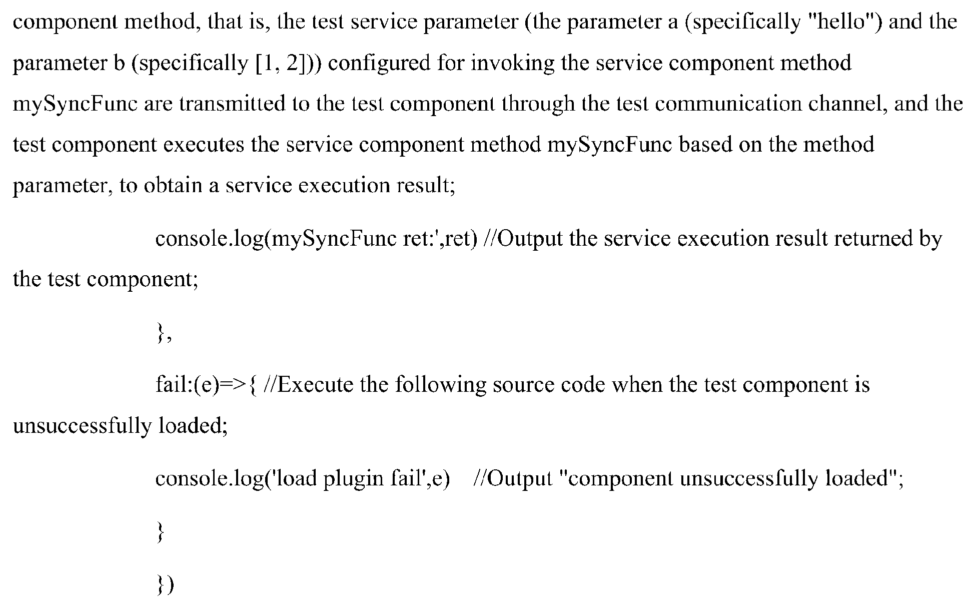

In other words, in this embodiment of the present disclosure, when template debugging source code is generated, the developer of the first application may further configure the component debugging source code based on the template debugging source code. The component debugging source code may define the component identifier of the to-be-loaded test component, so that the component debugging program loads the test component. In addition, the component debugging source code may define an obtaining manner (configured by the developer of the first application) of the test service parameter that needs to be transferred to the test component, so that when obtaining the test service parameter, the test debugging program transfers the test service parameter to the test component, to invoke the service execution method to execute the component service.

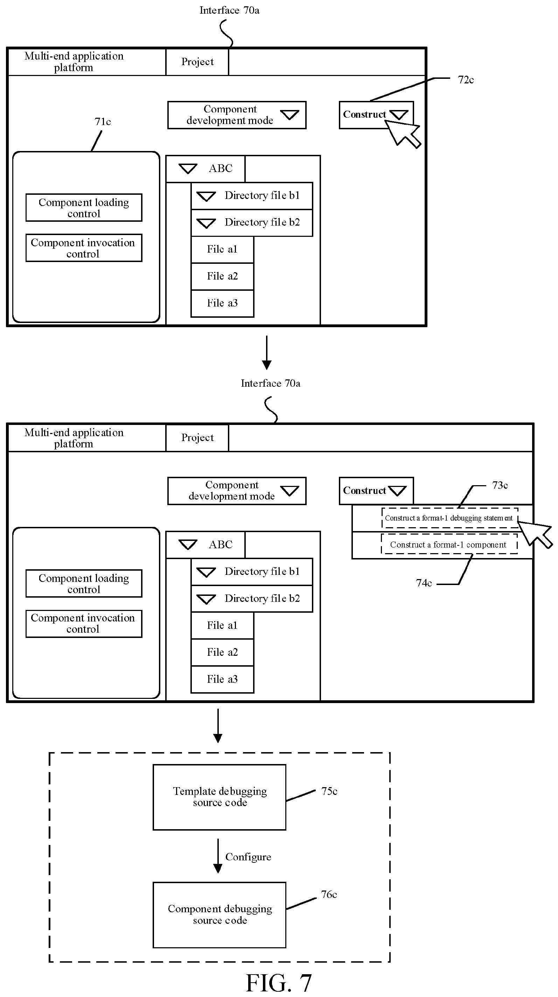

For example, as shown in FIG. 7 to FIG. 9, FIG. 7 to FIG. 9 are schematic diagrams of a service component construction process according to an embodiment of the present disclosure. When the component configuration source code is configured, switching is performed to display the application processing interface (for example, an interface 70a shown in FIG. 7, for example, the interface 60b in the example in FIG. 6) in the component development mode. In this case, a component debugging region 71c and a control (for example, a construction control 72c) configured to construct the service component are displayed in the application processing interface. For specific descriptions of another element in the application processing interface, refer to the related descriptions in FIG. 6. Further, the developer may trigger the construction control 72c to display a debugging statement construction control 73c configured to construct a format-1 debugging statement and a component construction control 74c configured to construct a format-1 component in the interface 70a in a manner of a pull-down list. In this embodiment of the present disclosure, for components of different formats, there are debugging statement construction controls and component construction controls that indicate different formats. For example, in the second format (for example, the iOS format), the debugging statement construction control may be a control configured to "construct a format-1 debugging statement", and the component construction control may be a control configured to "construct a format-1 component". For another example, in the third format (for example, the Android format), the debugging statement construction control may be a control configured to "construct a format-2 debugging statement", and the component construction control may be a control configured to "construct a format-2 component". For another example, in the first format (for example, the mini program format), the debugging statement construction control may be a control configured to "construct a format-3 debugging statement", and the component construction control may be a control configured to "construct a format-3 component" (herein, FIG. 7 shows only the construction controls in the second format).

Therefore, as shown in FIG. 7, the developer touches the control configured to "construct a format-1 debugging statement" on the computer device, so that the computer device generates template debugging source code 75c shown in FIG. 7 in response to a trigger operation for the debugging statement construction control 73c (for example, the control configured to "construct a format-1 debugging statement"). Then, the computer device may obtain component debugging source code 76c shown in FIG. 7 in response to configuration of the template debugging source code 75c by the developer of the first application.

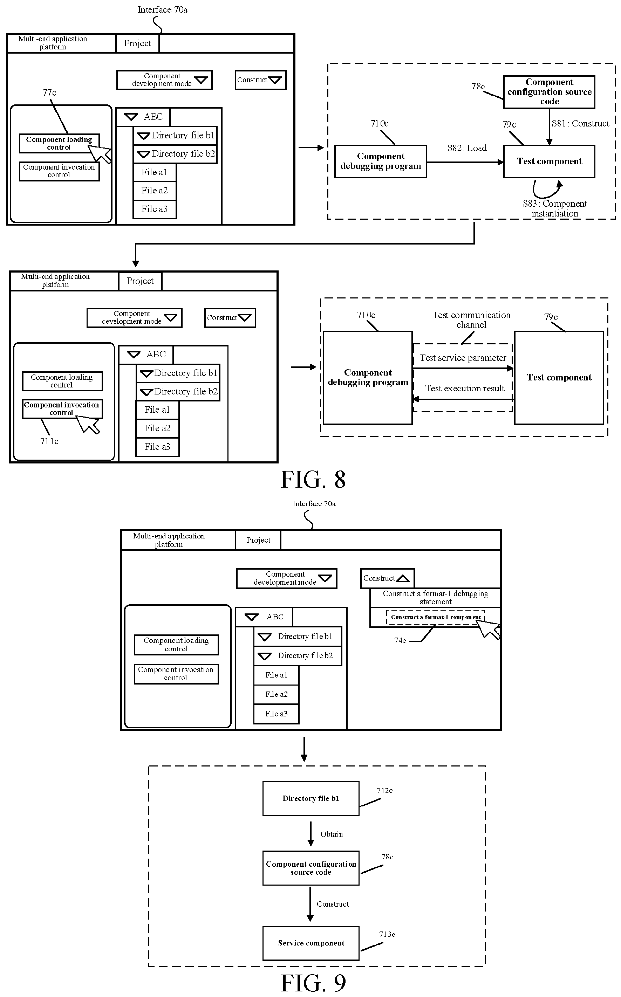

In this case, as shown in FIG. 8, after the multi-end application platform switches back to the application processing interface 70a, the developer of the first application may touch a component loading control 77c in the component debugging region. In this way, the computer device on which the multi-end application platform is deployed may construct (S81) a test component 79c based on component configuration source code 78c shown in FIG. 8, and a component debugging program 710c corresponding to the component debugging region loads (S82) the test component based on the component debugging source code, to indicate the test component to perform component instantiation (S83) by using the component configuration source code. Therefore, a test communication channel between the component debugging program and the test component may be obtained after component instantiation is completed. The test communication channel herein may be configured for representing the communication channel established between the second toolkit of the second application and the service component after component debugging of the test component is completed.

As shown in FIG. 8, after the computer device completes loading of the test component, the developer of the first application may further touch a component invocation control 711c in the component debugging region, so that the component debugging program 710c corresponding to the component debugging region may obtain, from the component debugging source code, the test service parameter configured for invoking the service execution method, and transfer the test service parameter to the test component 79c by using a test communication relationship indicated by the established test communication channel. In this way, the test component 79c may invoke the service execution method based on the test service parameter, to execute the component service, to obtain a test execution result corresponding to the component service.

As shown in FIG. 9, when determining that the test execution result is correct, the computer device may determine that component debugging of the test component is completed. In other words, when the test execution result indicates a test success, the developer of the first application may determine that debugging of the test component is completed. In this case, the developer of the first application may further touch, in the application processing interface (for example, the interface 70a) shown in FIG. 9, the control configured to "construct a format-1 component" (for example, the component construction control 74c), so that the computer device on which the multi-end application platform is deployed may obtain component configuration source code 78c for a format 1 (for example, the iOS format) from a component directory file 712c (for example, the directory file b1) corresponding to the format 1 (for example, the iOS format), to construct a service component 713c for the format 1 (for example, the iOS format). Similarly, in this embodiment of the present disclosure, when the test component is constructed, the component configuration source code for the format 1 (for example, the iOS format) is also obtained from the component directory file corresponding to the format 1 (for example, the iOS format), to construct a test component for the format 1 (for example, the iOS format).

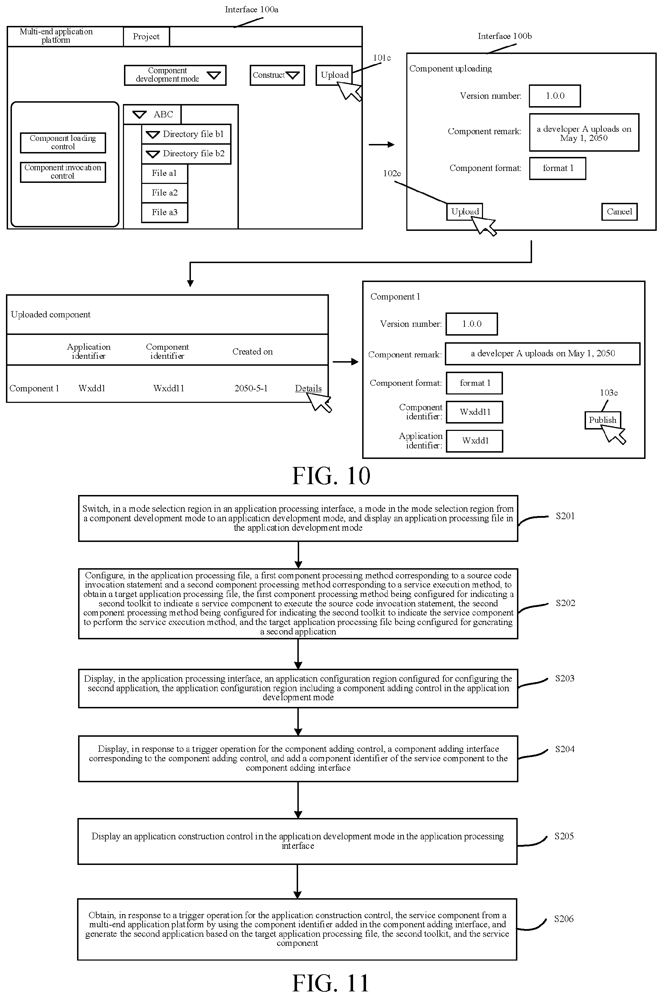

For another example, as shown in FIG. 10, FIG. 10 is a schematic diagram of a service component publishing process according to an embodiment of the present disclosure. The application processing interface (for example, an interface 100a shown in FIG. 10, for example, the interface 70a shown in the example of FIG. 7 to FIG. 9) may further display a component uploading control. After the service component is constructed by using the component creation process shown in FIG. 7 to FIG. 9, the developer of the first application may touch a control configured to upload the service component (for example, a component uploading control 102c), to display a component uploading interface (an interface 100b) for the service component. In the component uploading interface, a version number (for example, "1.0.0") and a component remark (for example, "A developer A uploads the service component on May 1, 2050") of the service component are filled in, and a component format (for example, the "format 1") of the service component is displayed. The component uploading control 102c may be touched to upload the service component to the multi-end application platform. In this case, the uploaded service component may be viewed on the multi-end application platform. For example, the component identifier (for example, "Wxdd11") of the service component, the application identifier (for example, "Wxdd1") of the second application to which the service component belongs, creation time (for example, "2050-5-1") of the service component may be viewed. In this case, a "Details" control may be touched to view detailed component information of the service component (for example, view the developer and view a component remark). The developer of the first application may touch a "Publish" control 103c to publish the service component on the multi-end application platform, that is, set the service component online.

S106: Construct the second application on the multi-end application platform based on the application project file, the second toolkit, and the service component, the second application being configured to indicate, during running, the second toolkit to invoke the service component based on the communication channel, to execute the component service provided by the service component, and the component service being configured for a service of the first application.

After constructing the service component by using the multi-end application platform, the computer device may further generate the second application by using the service component, the application processing file of the first application, and the second toolkit. In this way, after the second application is deployed and installed on the computer device, the second application may be run on the computer device. In this case, when the second application is run, the component service of the service component may be executed by using the communication relationship indicated by the established communication channel. In other words, in this case, even if the second toolkit does not provide the component service, the component service can be normally used in the second application. For a specific process of generating the second application, refer to related descriptions in the following embodiments.

Therefore, in the technical solution of the present disclosure, template component source code for different formats may be provided for the developer. This allows the developer to develop component configuration source code for a service based on the template component source code, generate a corresponding service component in a resource form for uploading to the multi-end application platform, and further define a component processing method for the service component in the application processing file of the first application in a configuration form (that is, a capability of developing component configuration source code of a custom service is provided to the developer in a resource form and a plug-in form, and the component configuration source code is integrated to the second application in the configuration form). Therefore, in the correspondingly generated second application, the application toolkit of the second application may establish the communication channel with the service component, to implement communication between the toolkit of the second application and the service component. Therefore, the service component exposes, to the second application, a functional service that the service component can provide, for the second application to invoke at any moment, and the second application can quickly access a native capability or an open capability that the second toolkit does not have in a one-click manner, without waiting for a universal application toolkit having a capability required by the second application to be officially published. This is equivalent to that the second application has all services of the corresponding first application. In other words, all the services of the first application are successfully shared with the second application by using the application toolkit of the second application and the service component, ensuring a success rate of executing the service of the second application. The technical solution of the present disclosure not only helps the developer use a custom native capability or open capability in the second application, but also helps the developer transform the component configuration source code into a resource form and a component form. The developer may specify a service component that needs to be compiled into the second application, and may remove a service component (by enabling the service component or not) from the second application based on a requirement, to implement capabilities of hot swapping and version management of the service component. A same service component may have a plurality of versions that may be respectively developed and managed by different developers of the first application, to implement coexistence of the plurality of versions of the same service component in a manner of cooperation between a plurality of persons.

In this embodiment of the present disclosure, the computer device may display the application processing interface of the application project file corresponding to the first application on the multi-end application platform, and when the mode in the application processing interface is the application development mode (for example, a multi-end development mode) corresponding to the multi-end application, may display the component creation control preconfigured for the application development mode (for example, the multi-end development mode) in the application processing interface. Further, the computer device may display the component creation interface in response to the trigger operation for the component creation control, and display the component configuration information configured for the service component in the component creation interface. The component configuration information herein may include at least the component identifier of the service component, the component directory address, and the target application identifier bound to the component identifier. The second application corresponding to the target application identifier may be an application in the multi-end application that is different from the first application. Further, the computer device may switch a display interface of the multi-end application platform from the component creation interface back to the application processing interface in response to the confirmation operation for the component configuration information (which means that, in this case, the computer device may close the component creation interface, and jump to display the application processing interface). Then, when the mode in the application processing interface is switched to the component development mode configured for developing the service component, the computer device may further display, in the component development mode by using the component directory address, the component directory file created for the service component. In this way, when the component project file includes the component directory file, and the component project file includes the template component source code that is adapted to the second application and that carries the component identifier, the developer may open the component project file by double-clicking the component project file, to display the template component source code stored in the component project file. Then, the computer device may obtain, through configuration in response to the configuration operation for the template component source code, the source code invocation statement that is associated with the template component source code and that is configured for invoking the service component, generate the component configuration source code of the service component by using the template component source code and the source code invocation statement, and construct, by using the component configuration source code, the service component that can implement a specified service. As can be seen, in this embodiment of the present disclosure, when the multi-end application platform is deployed on the computer device, a service component for a service (a component service) may be quickly configured by using a visual interface provided by the multi-end application platform. The source code invocation statement in the component configuration source code configured for constructing the service component may be configured for establishing the communication channel between the second toolkit and the service component. In this way, when the second application is constructed by using the application project file, the second toolkit, and the service component, the second application may be further deployed and installed on the computer device, so that during running of the second application: the computer device may invoke the service component through the pre-established communication channel, to execute the component service. In other words, in this embodiment of the present disclosure, when a service component corresponding to a service (a service A) is generated, a communication channel between the application toolkit (that is, the second toolkit) of the second application and the service component may be established, so that the second application can normally use the service A provided by the service component, without being limited to a service provided by the second toolkit, that is, service expansion of the application toolkit is implemented. Therefore, when the second application is developed, the generated second application can implement some custom services more conveniently, improving application development flexibility, and there is no need to develop an application toolkit that can provide all required services for the second application from the beginning, improving application development efficiency. In other words, when the second application corresponding to the first application is generated, a success rate of executing a service of a specific application (for example, the second application) in the multi-end application can be ensured by developing a service component for a specified service. In other words, in this embodiment of the present disclosure, the service of the first application can be successfully shared with the second application by using the developed service component.

Further, referring to FIG. 11, FIG. 11 is a schematic flowchart of a data processing method based on a multi-end application platform according to an embodiment of the present disclosure. As shown in FIG. 11, the method may be performed by the foregoing computer device. The computer device may be a service terminal configured with the multi-end application platform. For example, the service terminal may be the service terminal 200a shown in FIG. 1. In this embodiment of the present disclosure, after generating component configuration source code (the component configuration source code includes a service execution method configured for a component service) of a service component by using the multi-end application platform, a developer may further obtain the service component through compilation by using the component configuration source code, and publish and display the service component obtained through compilation on the multi-end application platform. In this way, a specific method of constructing, by the developer on the computer device on which the multi-end application platform is deployed, a second application by using an application project file (the application project file includes an application processing file of a first application) of the first application, a second toolkit provided by the multi-end application platform for the second application, and the service component may include the following operation S201 to operation S206.

S201: Switch, in a mode selection region in an application processing interface, a mode in the mode selection region from a component development mode to an application development mode, and display the application processing file in the application development mode.

The developer of the first application may switch the component development mode to the application development mode, to develop the second application. In other words, the developer of the first application may perform related configuration for the second application. For example, when the service component is added, a related statement for communication with the service component may be configured.

An application project file includes the application processing file of the first application. In the present disclosure, the application processing file may be displayed by using the application processing interface in the application development mode, so that targeted resource configuration may be performed on the application processing file in the application development mode.

S202: Configure, in the application processing file, a first component processing method corresponding to a source code invocation statement and a second component processing method corresponding to the service execution method, to obtain a target application processing file, the first component processing method being configured for indicating the second toolkit to indicate the service component to execute the source code invocation statement, the second component processing method being configured for indicating the second toolkit to indicate the service component to perform the service execution method, and the target application processing file being configured for generating the second application.

If an application service of the first application is provided by an application toolkit of the first application (the application service is referred to as a toolkit service in this case), when the application service (for example, the toolkit service) provided by the application toolkit needs to be triggered, the first application may directly invoke the application toolkit, to execute the toolkit service by using the application toolkit of the first application. However, if an application service needs to be provided by a service component (the application service is referred to as a component service in this case), after the second application corresponding to the first application is obtained, the second application may transfer a component identifier of the service component to the second toolkit when the component service is triggered, so that the second toolkit loads the service component, and invokes the service component to execute the component service. In other words, in this case, a related statement needs to be defined in the application processing file of the first application, to implement communication with the service component by using the second toolkit when the component service is triggered (in this case, the second toolkit needs to have a function of loading the service component and communicating with the service component).

The first component processing method may be configured for indicating the second toolkit to indicate the service component to execute the source code invocation statement (that is, may be configured for loading and instantiating the service component). The second component processing method may be configured for indicating the second toolkit to indicate the service component to perform the service execution method (that is, may be configured for using the service component). In other words, in this embodiment of the present disclosure, the target application processing file may be further configured for generating the second application.

The first component processing method and the second component processing method are configured for the second application to perform data communication with the service component. To be specific, establishment of a communication channel between the second toolkit and the service component may be triggered by using the first component processing method, and a method parameter configured to be transferred to the service component to invoke the service execution method may be obtained by using the second component processing method. Similar to the component loading method in the foregoing component debugging source code, the first component processing method is configured for indicating the application toolkit to load the service component. When the service component is loaded, the source code invocation statement and template component initialization source code are triggered to be executed. Similar to the component using method in the foregoing component debugging source code, the second component processing method is configured for obtaining the method parameter configured for invoking the service execution method for the service component. The service execution method for the service component may be triggered to be executed.

The first component processing method (loadNativePlugin) may be as follows:

```
            loadNativePlugin ({
            pluginID:'wxdd11', //component identifier of the to-be-loaded service component,
 where the second application transfers the component identifier to the second toolkit, and the
 second toolkit may load the corresponding service component based on the component identifier;
            success:(plugin)=>{ //Execute the following source code when the service
 component is successfully loaded;
            console.log('load plugin success',plugin) //Output "component successfully loaded";
            this.setData({
            myPlugin:plugin //Define an instantiated component object plugin as myPlugin for
 storage;
            })
            },
            fail:(e)=>{ //Execute the following source code when the service component is
 unsuccessfully loaded;
            console.log('load Plugin fail',e) //Output "component unsuccessfully loaded";
            }
            })
```

The component identifier of the to-be-invoked service component may be defined in the first component processing method, so that the second toolkit loads the corresponding service component when obtaining the component identifier. In addition, it may be defined in the first component processing method that when the instantiated component object returned by the service component is received, the instantiated component object is stored, and then the service component may be invoked by using the service execution method exposed by the instantiated component object at any moment, to execute the component service.

The second component processing method may be as follows:
const ret =myPlugin.mySyncFunc({a:'hello',b:[1,2]}) //Define herein an input parameter (the method parameter, that is, a service parameter, which needs to be configured by the developer of the first application based on a specific service component) that the second application needs to obtain for invoking a service component method, where the service component method mySyncFunc is a service component method exposed by the stored instantiated component object myPlugin, the service component is enabled to invoke the service component method if the second application wants to use the service component method, that is, the service parameter (a parameter a (specifically "hello") and a parameter b (specifically [1, 2])) configured for invoking the service component method mySyncFunc are transmitted to the service component by the second toolkit through the communication channel, and the service component executes the service component method mySyncFunc based on the method parameter, to obtain a service execution result;
console.log(mySyncFunc ret:',ret) //Output the service execution result returned by the service component;

The method parameter of the to-be-invoked service execution method, that is, an obtaining manner (specifically determined based on different component services) of the input parameter of the service execution method, that is, how to transfer the service parameter to the service component when the component service is triggered, may be defined in the second component processing method. The service execution method in the second component processing method is a method exposed by the second application, and a method name of the exposed method remains consistent with a method name of the service execution method in the component configuration source code of the service component.

The target application processing file may be configured for generating the second application. In this case, the generated second application needs to be run based on the target application processing file, and if the component service is triggered during running, may invoke the service component by using the first component processing method and the second component processing method, to implement the component service.

S203: Display, in the application processing interface, an application configuration region configured for configuring the second application, the application configuration region including a component adding control in the application development mode.

The target application processing file defines how to use the service component. In this case, the service component that needs to be added to the second application further needs to be configured.

The application processing file displayed in the application processing interface may specifically include an application configuration file (project.miniapp.json). Therefore, the computer device on which the multi-end application platform is deployed may display, in response to a file opening operation for the application configuration file, the application configuration region corresponding to the application configuration file, and add and configure the service component in the application configuration region.

The component adding control in the application development mode is displayed in the application configuration region. The component adding control may include adding controls configured to add service components in different formats, for example, an adding control configured to add a service component in a second format (for example, an iOS format), and an adding control configured to add a service component in a third format (for example, an Android format). An example in which the second application that needs to be generated is in the second format (for example, the iOS format) is used herein. Therefore, a service component in a corresponding format is added by using the adding control configured to add the service component in the second format (for example, the iOS format).

S204: Display, in response to a trigger operation for the component adding control, a component adding interface corresponding to the component adding control, and add the component identifier of the service component to the component adding interface.

The developer may configure the component identifier of the to-be-added service component in the component adding interface. In some embodiments, the developer may further configure a version number of the to-be-added service component in the component adding interface.

In some embodiments, the component adding interface may further include an enable switch for the service component. Whether the service component needs to be enabled may be determined by using the enable switch. If the enable switch is in an on state, the service component can be configured to the second application currently; or if the enable switch is in an off state, the service component cannot be configured to the second application currently, and in this case, only a configuration record of the service component is kept. In this way, hot swapping of the service component can be implemented.

In some embodiments, a configuration record of a service component, that is, a configured service component that is enabled or a configured service component that is not enabled, may be viewed in the application configuration region. In this case, any service component may be touched, to enter a component adding interface for the service component, and then whether to enable the service component may be determined in the component adding interface.

S205: Display an application construction control in the application development mode in the application processing interface.

S206: Obtain, in response to a trigger operation for the application construction control, the service component from the multi-end application platform by using the component identifier added in the component adding interface, and generate the second application based on the target application processing file, the second toolkit, and the service component.

The application construction control in the application development mode is displayed in the application processing interface. The application construction control may include construction controls for different formats, for example, include a construction control for the second format (for example, the iOS format) (for example, a "construct a format-1 application" control), and for example, include a construction control for the third format (for example, the Android format) (for example, a "construct a format-2 application" control).

Therefore, when the trigger operation for the application construction control is detected, the service component corresponding to the component identifier configured in the component adding interface (or the service component corresponding to the configured component identifier and version number, where when the component adding interface includes the enable switch, the obtained service component needs to be a service component in an enabled state) may be obtained from the multi-end application platform. In this case, the second toolkit may be obtained, to generate the second application based on the target application processing file, the second toolkit, and the service component obtained from the multi-end application platform.

When the developer of the first application triggers the "construct a format-1 application" control, the second toolkit may be an officially published toolkit for the second format (for example, the iOS format), or may be a toolkit specified and provided by the developer of the first application by using the multi-end application platform. When the developer of the first application triggers the "construct a format-2 application" control, the second toolkit may be an officially published toolkit for the third format (for example, the Android format), or may be a toolkit specified and provided by the developer of the first application by using the multi-end application platform.

To-be-added service components configured for adding controls for different formats are obtained under construction controls for different formats. For example, if the developer of the first application triggers the "construct a format-1 application" control, a configured to-be-added service component for the second format (for example, the iOS format) is obtained. For another example, if the developer of the first application triggers the "construct a format-2 application" control, a configured to-be-added service component for the third format (for example, the Android format) is obtained.

In this case, the obtained second application may implement data communication with the service component by using a component processing method (the first component processing method and the second component processing method) in the target application processing file and the application toolkit of the second application, so that the second application can normally use the component service. For a specific process of using the component service in the second application, refer to related descriptions in the following embodiments.

Component configuration information includes an application identifier associated with the service component. Therefore, obtaining the service component corresponding to the component identifier configured in the component adding interface from the multi-end application platform may be: obtaining the service component corresponding to the component identifier configured in the component adding interface from the multi-end application platform if the application identifier associated with the service component is the same as an application identifier of the second application. In other words, it is determined that the service component belongs to the to-be-generated second application.

In other words, in an implementable manner, a specific implementation in which the computer device obtains the service component may be described as: obtaining a target application identifier by using the component identifier added in the component adding interface; and further obtaining the service component corresponding to the target application identifier bound to the component identifier from the multi-end application platform if the target application identifier associated with the service component is the application identifier of the second application.

In other words, after the developer of the first application completes configuring the to-be-added service component, the multi-end application platform needs to verify the service component, to determine whether the service component belongs to the developer of the first application, that is, whether the application identifier associated with the service component is the application identifier of the to-be-generated second application. In other words, in this embodiment of the present disclosure, whether the service component belongs to the to-be-generated second application may be determined by using the target application identifier bound to the component identifier of the service component. After verification of the service component succeeds, the service component corresponding to the component identifier configured in the component adding interface may be obtained from a published service component. The application identifier of the second application is pre-generated by the multi-end application platform or preconfigured by the developer of the first application.

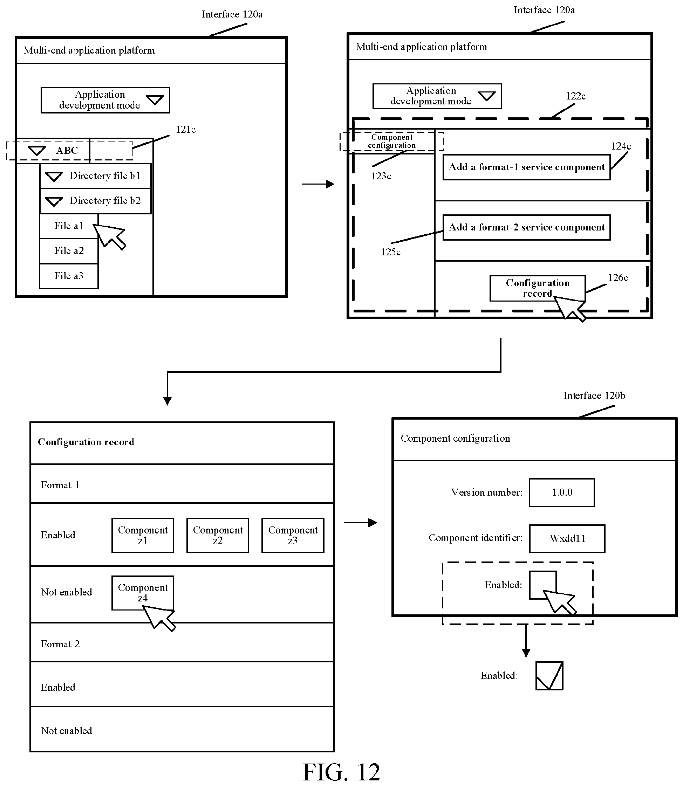

For example, as shown in FIG. 12 to FIG. 14, FIG. 12 to FIG. 14 are schematic diagrams of a process of generating a second application according to an embodiment of the present disclosure. As shown in FIG. 12, after obtaining the target application processing file, the computer device may switch a display interface of the multi-end application platform to the application processing interface (for example, an interface 120a shown in FIG. 12, for example, the interface 100a in the example in FIG. 10). Directory information 121c of the application project file of the first application is displayed in the application processing interface. For example, as shown in FIG. 12, the directory information may specifically include a recorded project identifier (for example, ABC shown in FIG. 12) of the first application, the recorded application processing file of the first application in the application project file (the application processing file may include a file a1, a file a2, and a file a3 shown in FIG. 12), and a directory file b1 and a directory file b2 (for specific descriptions of the directory file b1 and the directory file b2, refer to the related descriptions of FIG. 6) that are created for the service component. For example, an example in which the application configuration file is the file a1 shown in FIG. 12 is used herein. In this case, the developer of the first application may click the file a1 to display an application configuration region 122c shown in FIG. 12 in the application processing interface (in this case, the mode selection region in the application processing interface is in the application development mode). The developer may further click a component configuration control 123c configured to perform component configuration, to enter a component configuration region. The component configuration region herein is a region in the application configuration region 122c. A plurality of component adding controls are displayed in the component configuration region. The plurality of component adding controls herein may specifically include a component adding control 124c configured to "add a format-1 service component" and a component adding control 125c configured to "add a format-2 service component" shown in FIG. 12. In addition, the component configuration region may further include a configuration record control 126c configured to view a configuration record. As shown in FIG. 12, the developer may view the configuration record of the service component by touching the configuration record control 125c in the interface 120a. The configuration record may specifically include recorded configuration records of service components in different formats (for example, a configuration record for format-1 service components and a configuration record for format-2 service components). In addition, as shown in FIG. 12, a format-1 service component that is enabled (for example, components z1 to z3) or a format-1 service component that is not enabled (for example, a component z4) may be viewed in the configuration record for format-1 service components. In this case, the developer may click a service component (for example, the component z4) to enter a component adding interface (for example, an interface 120b shown in FIG. 12) for the component z4. A version number (for example, "1.0.0") and a component identifier (for example, "Wxdd11") of the component z4, and a selection box for determining whether to enable the service component in the interface 120b are displayed in the component adding interface. For example, when needing to enable the service component, the developer may trigger the selection box, to trigger an enable switch for the service component by checking the selection box. In this case, the enable switch is in an enabled state.

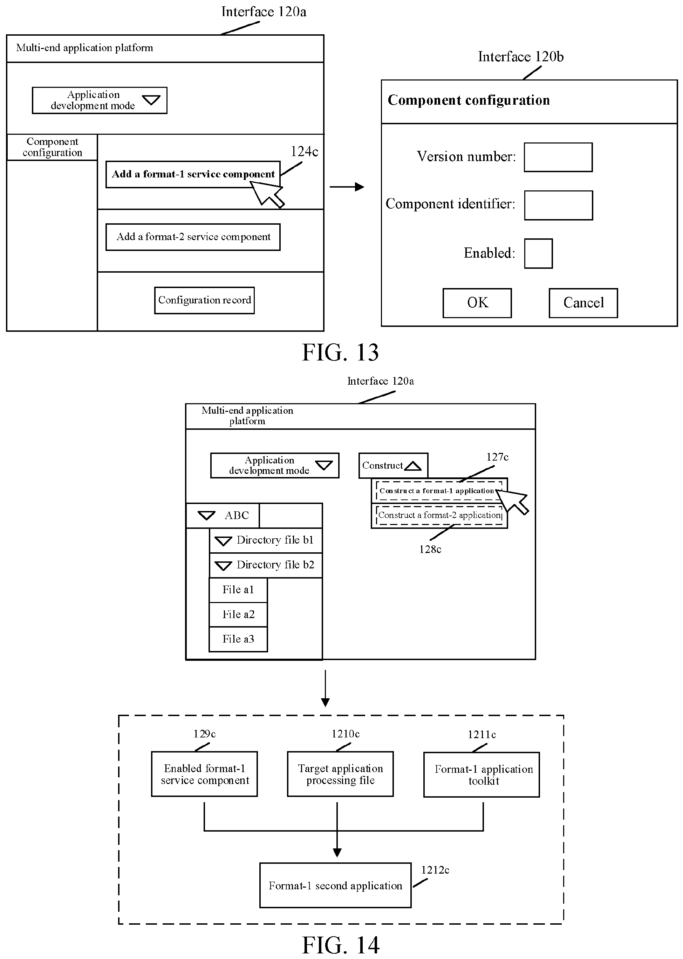

As shown in FIG. 13, the computer device may further directly display, in response to a trigger operation for the component adding control 124c in the component configuration region in the application processing interface (the interface 120a), a component adding interface (the interface 120b) corresponding to the component adding control. In this way, the developer of the first application may configure a component identifier and a version number of the to-be-added service component in the component adding interface, and may also determine whether to enable the service component by checking the selection box. For example, the developer of the first application may trigger an enable switch for the format-1 service component by checking the selection box, to determine to enable the format-1 service component. In some embodiments, the developer may alternatively trigger the enable switch for the format-1 service component to be closed by unchecking the selection box, to determine not to enable the service component. Then, the developer may quickly view the configured to-be-added service component in the configuration record in the component configuration region after performing a confirmation operation on an "OK" control in the component adding interface.

Therefore, as shown in FIG. 14, when the display interface of the multi-end application platform is switched to the application processing interface (the interface 120a), the computer device may configure the mode in the mode selection region in the application processing interface as the application development mode. As shown in FIG. 14, in the application development mode, the construction control in the application processing interface may be an application construction control configured for constructing the second application. The developer may view the application construction controls for different formats by touching the application construction control. For example, the application construction control herein may include an application construction control 127c for the second format (for example, the iOS format) (for example, a control configured to "construct a format-1 application") and an application construction control 128c for the second format (for example, the Android format) (for example, a control configured to "construct a format-2 application"). In this case, the developer may determine a to-be-enabled service component 129c for the second format (a format 1) from the configuration record by touching the control for "constructing a format-1 application" (that is, the application construction control 127c), obtain, after successfully verifying the to-be-enabled service component for the second format (the format 1), the corresponding service component for the second format (the format 1) from service components published on the multi-end application platform, and generate a second application 1212c in the second format (the format 1) based on a target application processing file 1210c, the obtained service component 129c for the second format (the format 1), and a second toolkit 1211c (that is, an application toolkit for the format 1). In other words, in this embodiment of the present disclosure, during generation of the second application, when an application file (for example, an IPA file, a file format of an iOS application package, where the IPA file may specifically include all code, resources, metadata, and signatures of an application, and is a standard format for installation and deployment of an application on a second-format device (a device with an iOS running environment)) corresponding to the second application in the second format (the format 1) is specifically generated, the obtained service component for the second format (the format 1) is compiled into the application file together. The second-format device herein may be the foregoing computer device on which the multi-end application platform is deployed. In some embodiments, the second-format device herein may alternatively be another computer device. A specific computer device for installing and running the second application is not limited herein.

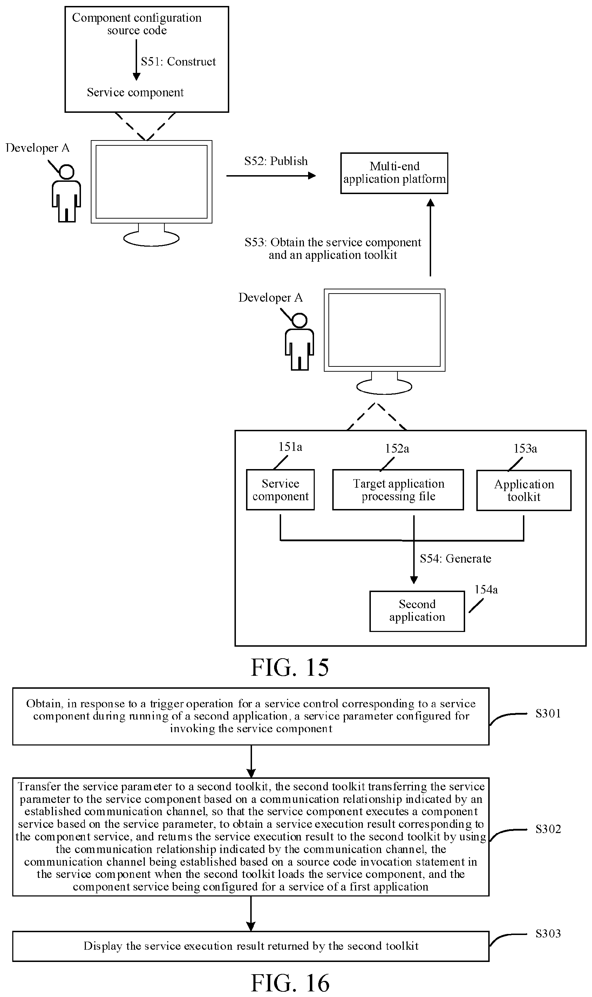

For another example, as shown in FIG. 15, FIG. 15 is a schematic diagram of a generation scenario of a second application according to an embodiment of the present disclosure. A developer A may open the application processing interface corresponding to the application project file of the first application on the multi-end application platform, obtain the component configuration source code through development in the application processing interface, and construct (S51) the service component based on the component configuration source code. Further, the developer A may publish (S52) and display the service component on the multi-end application platform. In this case, the developer A may configure a target application processing file 152a in the application processing interface, and configure a to-be-added service component 151a. As shown in FIG. 15, when constructing the second application, the computer device may first verify the to-be-added service component, obtain (S53) the corresponding to-be-added service component and an application toolkit from the service components published by the multi-end application platform after verification succeeds, and then generate (S54) a second application 154a through compilation based on the obtained service component 151a, the target application processing file 152a, and an application toolkit 153a (which may also be obtained from the multi-end application platform, and for example, is an officially published application toolkit on the multi-end application platform) configured for installing the second application.

When the first application is a mini program, all services of the mini program are provided by a mini program toolkit, and all services of the correspondingly generated second application (for example, an iOS application) are provided by an iOS toolkit. In addition, when hot swapping cannot be implemented for a service integrated in the application toolkit, if a new service needs to be added to the application toolkit, a size of the application toolkit is increased, increasing a package size of the correspondingly generated second application. When the application toolkit of the second application may be a universal application toolkit, the new service provided may not be needed by the second application currently. Therefore, component resource processing may be performed on a service that needs to be newly added. In this way, when generating the second application, the developer may choose not to configure the service component corresponding to the newly added service into the second application. This avoids occupation of the package size of the generated second application by an unnecessary service, thereby optimizing an occupied package volume size of the second application. In addition, the developer may determine, at any moment, to adjust a service component to be enabled or not enabled. In this way, when the second application is constructed, a needed service component is compiled into the second application according to a rule, and can be invoked at any moment when the second application is run. In other words, the service component may be added into or removed from the second application at any moment, implementing hot swapping of the service component. In other words, hot swapping of any native service or expanded service can be implemented in the application.

In this embodiment of the present disclosure, the developer may switch, in the mode selection region in the application processing interface, the mode in the mode selection region from the component development mode to the application development mode configured for developing the second application, and obtain, in the application development mode, the target application processing file by using the first component processing method corresponding to the source code invocation statement configured in the application processing file and the second component processing method corresponding to the service execution method. Further, the computer device displays the application configuration region associated with the second application in the application processing interface, and display the application construction control in the application development mode in the application processing interface. Then, the computer device may obtain the service component corresponding to the component identifier configured in the component adding interface from the multi-end application platform in response to the trigger operation for the application construction control, and generate the second application based on the target application processing file, the second toolkit, and the service component obtained from the multi-end application platform. The application toolkit may be configured to establish the communication channel with the service component, so that the second application may invoke, during running, the service component through the established communication channel, to execute the component service. In other words, after a service component corresponding to a service (a service A) is generated, and the service component is installed in the second application, the computer device running the second application may enable, by using a communication channel established between the application toolkit of the second application and the service component, the second application to use the service A provided by the service component, without being limited to a service provided by the second toolkit. This not only can implement service expansion of the application toolkit, but also can enable the generated second application to implement some custom services more conveniently when the second application is developed, improving application development flexibility. This means that in this embodiment of the present disclosure, there is no need to develop an application toolkit that can provide all required services for the second application from the beginning. Therefore, application development efficiency can be improved from the root. In other words, in this embodiment of the present disclosure, when the second application corresponding to the first application is generated, a success rate of executing a service of a specific application (for example, the second application) in the multi-end application can be ensured by developing a service component for a specified service. Therefore, it can be ensured that the service of the first application can be indirectly used by the second application in an actual usage scenario of the multi-end application, and the service of the first application can be successfully shared with the second application by using the configured service component.

Further, referring to FIG. 16, FIG. 16 is a schematic flowchart of a data processing method based on a multi-end application platform according to an embodiment of the present disclosure. As shown in FIG. 16, the method may be performed by the foregoing computer device. The computer device may be a service terminal configured with a second application. For example, the service terminal may be the service terminal 200b shown in FIG. 1. In this case, an embodiment of the present disclosure provides a data processing apparatus based on a multi-end application platform. A multi-end application on the multi-end application platform may specifically include a first application and the second application. The second application is constructed on the multi-end application platform by using an application project file of the first application, a second toolkit, and a service component. The second toolkit is provided by the multi-end application platform for the second application. The service component is constructed on the multi-end application platform based on component configuration source code. The component configuration source code is obtained in response to a configuration operation for template component source code. A source code invocation statement corresponding to the configuration operation is configured for establishing a communication channel between the second toolkit and the service component. The template component source code is component source code in a component project file displayed in a component development mode. The component development mode is a mode in an application processing interface that corresponds to the application project file and that is displayed on the multi-end application platform. The component project file is stored in a component directory file created for the service component. The component directory file is determined by using a component directory address in component configuration information configured for the service component. As shown in FIG. 16, the method may specifically include the following operation S301 to operation S303.

S301: Obtain, in response to a trigger operation for a service control corresponding to the service component during running of the second application, a service parameter configured for invoking the service component.

When the second application is run (the second application is run based on a target application processing file), the service control (for example, the foregoing control for paying for the payment service) corresponding to the service component may be displayed in an application interface of the second application, to trigger a component service provided by the service component. In this case, the computer device needs to execute the component service by using the service component corresponding to the component service. For a specific construction manner of constructing the second application by using the application project file of the first application, refer to the related descriptions in the foregoing embodiments, and details are not described herein again.

The service component herein may be constructed on the multi-end application platform based on the component configuration source code. The component configuration source code is obtained in response to the configuration operation for the template component source code. The source code invocation statement corresponding to the configuration operation is configured for establishing the communication channel between the second toolkit and the service component. The template component source code is the component source code in the component project file displayed in the component development mode. The component development mode is a mode in the application processing interface of the first application displayed on the multi-end application platform. The component development mode is displayed when the component directory file associated with the service component is created. The component project file belongs to the component directory file. For a construction manner of the service component, refer to the related descriptions in the foregoing embodiments, and details are not described herein.

It can be learned from the foregoing embodiments that the component configuration source code includes a service execution method for the component service, and the second application determined by the target application processing file may specifically include a second component processing method corresponding to the service execution method. An obtaining manner of a method parameter (that is, an input parameter, that is, the service parameter for invoking the service component, i.e., a service parameter for invoking the service execution method for the service component) required by the service execution method is defined in the second component processing method. Therefore, the service parameter configured for invoking the service component can be obtained from the second component processing method. The service parameter is configured for indicating the service component to invoke the service execution method to execute the component service.

S302: Transfer the service parameter to the second toolkit, the second toolkit transferring the service parameter to the service component based on a communication relationship indicated by the established communication channel, so that the service component executes the component service based on the service parameter, to obtain a service execution result corresponding to the component service, and returns the service execution result to the second toolkit by using the communication relationship indicated by the communication channel, the communication channel being established based on the source code invocation statement in the service component when the second toolkit loads the service component, and the component service being configured for a service of the first application.

The second application may transfer the service parameter to the application toolkit of the second application, and the application toolkit of the second application may further transfer the service parameter to the service component by using the communication relationship indicated by the established communication channel. In this case, the service component may invoke the corresponding service execution method based on the service parameter to execute the component service, to obtain the service execution result corresponding to the component service. Then, the service component may return the service execution result to the second toolkit by using the communication relationship indicated by the communication channel.

The communication channel is established based on the source code invocation statement in the service component when the second toolkit loads the service component. In other words, when the component service is triggered for the first time, the communication channel needs to be established first. In this way, data communication between the second application and the service component may be subsequently implemented based on the communication channel at any moment.

The second application includes a first component processing method corresponding to the source code invocation statement, to establish the communication channel. Details may be: invoking the second toolkit (that is, the application toolkit of the second application) based on the first component processing method, to load the service component, and indicating the service component to invoke the source code invocation statement to perform component instantiation; and obtaining the communication channel between the second toolkit (that is, the application toolkit of the second application) and the service component when component instantiation is completed.

The component configuration source code includes template component initialization source code in the template component source code. Component instantiation may be specifically: The computer device may obtain a component identifier of the service component from the first component processing method. Further, the computer device may transfer the component identifier to the second toolkit (that is, the application toolkit of the second application), so that the second toolkit (that is, the application toolkit of the second application) loads the service component based on the component identifier, and indicates the service component to invoke the source code invocation statement to perform component registration and invoke the template component initialization source code to perform component initialization after component registration, component initialization being component instantiation.

The second application performs the first component processing method, to transfer the component identifier to the second toolkit, so that the second toolkit loads the service component based on the component identifier, and indicates the service component to perform component instantiation (including component registration and component initialization). After performing component instantiation, the service component returns a component object (i.e., an instantiated component object, that is, information returned by the component object defined in the foregoing target component registration source code after instantiation, where the returned information may be configured as a fixed parameter, for example, "plugin") of the service component. When receiving the instantiated component object, the second toolkit may further return the instantiated component object to the second application. The second application may store the instantiated component object, indicating that establishment of the communication channel between the second toolkit and the service component is completed, that is, loading of the service component is completed. The communication channel may be configured for data exchange between the second application and the service component. In this case, after storing the instantiated component object, the second application may implement a method exposed by the instantiated component object, that is, obtain a method parameter of the method exposed by the instantiated component object from the second component processing method, to use the method exposed by the instantiated component object based on the method parameter.

S303: Display the service execution result returned by the second toolkit.

The second application run on the computer device may receive the service execution result returned by the second toolkit (that is, the application toolkit of the second application), and may further output and display the service execution result.

When the second application triggers a service (a toolkit service) that can be executed without invoking a service component, the second application may directly execute the toolkit service by invoking the second toolkit, and display a service execution result of the toolkit service that is returned by the second toolkit.

In some embodiments, when the second application triggers a service (a component service) that can be executed only by invoking a service component, the second application invokes the second toolkit to establish a communication channel with the service component, and the second toolkit triggers, based on the communication channel, the service component to invoke a service execution method to execute the component service. In addition, after obtaining a service execution result, the service component may further return the obtained service execution result to the second toolkit. Then, the second toolkit may further return the service execution result to the second application.

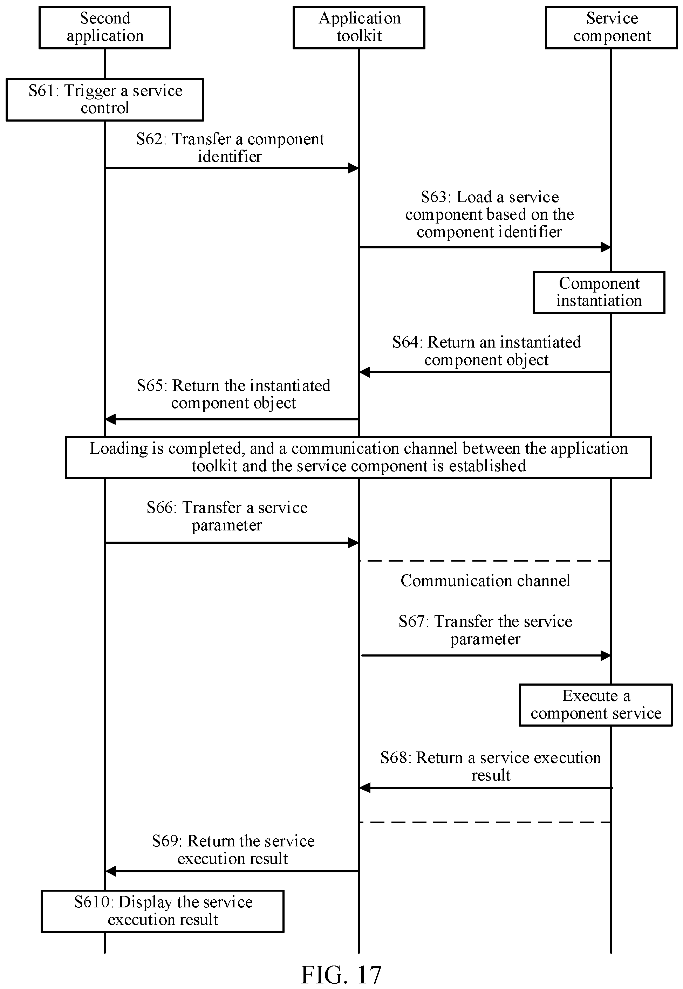

For example, as shown in FIG. 17, FIG. 17 is a schematic flowchart of interaction for service execution according to an embodiment of the present disclosure. The computer device may obtain the second application through compilation by using the target application processing file, the application toolkit, and the service component. The second application may be run on the computer device based on the target application processing file. In this case, when the second application is run, if the service control corresponding to the service component is triggered (that is, operation S61), the second application may obtain the component identifier of the service component from the first component processing method for the service component corresponding to the component service. Further, the second application may transfer the component identifier to the second toolkit (that is, operation S62). Further, when performing operation S63, the application toolkit may load the service component based on the component identifier, to perform component instantiation on the service component. The component instantiation herein may specifically include component registration and component initialization. Further, after component instantiation is completed, the service component may further perform operation S64, that is, return the instantiated component object to the application toolkit. Further, when performing operation S65, the application toolkit may further return the instantiated component object to the second application. In this case, the second application may store the instantiated component object, indicating that loading of the service component is completed, and establish the communication channel between the application toolkit and the service component. Then, the second application may obtain, from the second component processing method for the service component corresponding to the component service by using the service execution method exposed by the instantiated component object, the service parameter configured for invoking the service execution method, and transfer the service parameter to the application toolkit (that is, operation S66). Further, the application toolkit may perform operation S67 based on the communication channel between the application toolkit and the service component, to transfer the service parameter to the service component. In this case, the service component invokes the corresponding service execution method based on the service parameter, to execute the component service to obtain the service execution result. Further, the service component may perform operation S68, that is, return the service execution result to the application toolkit. In this way, the application toolkit may further perform operation S69, that is, return the service execution result to the second application. Finally, when performing operation S610, the second application may display the service execution result on the computer device running the second application, indicating that execution of the component service is completed.

In other words, a behavior layer (Javascript layer) of the second application may be configured to performing the first component processing method, to transfer a related parameter (for example, the component identifier) to the second toolkit, so that the second toolkit may load the service component based on the component identifier, to subsequently perform a series of service component instantiation operations such as component registration and component initialization on the service component. After the service component is instantiated, the instantiated component object may be returned to the second toolkit. In this case, the communication channel between the service component and the second toolkit is currently established (that is, the second application may indicate the second toolkit to invoke the service component based on the communication channel). In this case, the behavior layer of the second application may invoke all service execution methods exposed by the instantiated component object, that is, may use the service execution methods by using the second toolkit.

In this embodiment of the present disclosure, when the second application is run, the computer device may obtain, in response to the trigger operation for the component service, the service parameter configured for invoking the service component, and transfer the service parameter to the application toolkit (that is, the second toolkit) of the second application, and the second toolkit further transfers the service parameter to the service component based on the communication relationship indicated by the communication channel established between the second application and the service component, so that the service component may execute the component service based on the service parameter. In this way, the second application may be subsequently configured to display the service execution result returned by the application toolkit. The application toolkit may establish the communication channel with the service component, so that the second application may invoke, during running, the service component through the established communication channel, to execute the component service. In other words, in this embodiment of the present disclosure, when a service component corresponding to a service (a service A) is generated, the service component may be installed in the second application. In this way, the second application can normally use, by using the communication channel established between the application toolkit of the second application and the service component, the service A provided by the service component, without being limited to a service provided by the second toolkit. This implements service expansion of the application toolkit. In addition, in this embodiment of the present disclosure, when the second application is developed, the generated second application can implement some custom services more conveniently in a manner that a plug-and-play service component is invoked by an existing application toolkit, improving application development flexibility, and there is no need to develop an application toolkit that can provide all required services for the second application from the beginning, improving application development efficiency. In other words, in this embodiment of the present disclosure, when the second application corresponding to the first application is generated, a success rate of executing a service of a specific application (for example, the second application) in the multi-end application can be ensured by developing a service component for a specified service.

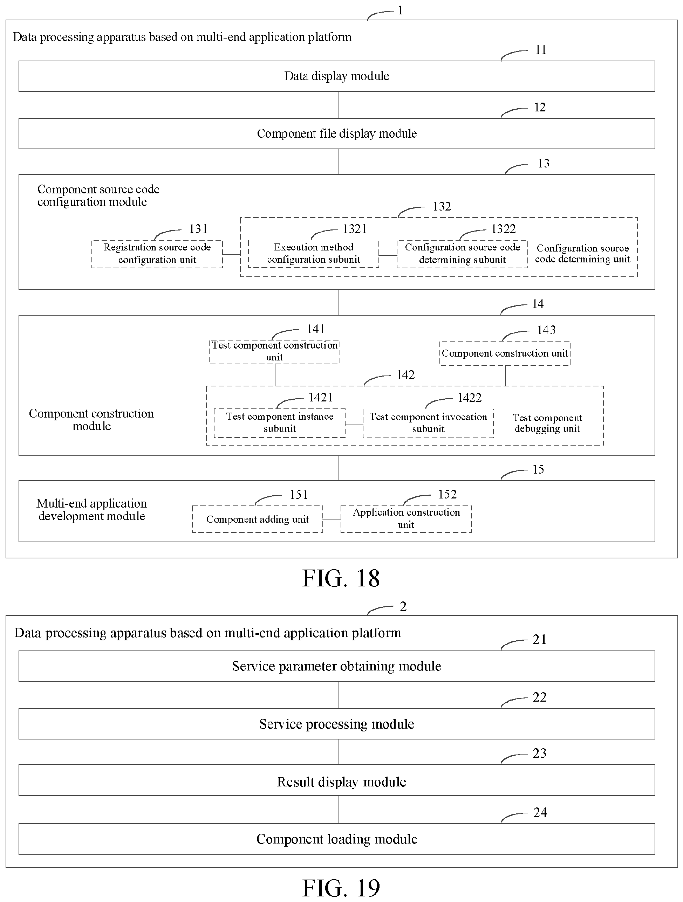

Further, referring to FIG. 18, FIG. 18 is a schematic diagram of a structure of a data processing apparatus based on a multi-end application platform according to an embodiment of the present disclosure. The multi-end application platform is configured to develop a multi-end application by using an application project file of a first application. The multi-end application includes the first application. As shown in FIG. 18, the data processing apparatus 1 based on the multi-end application platform may include a data display module 11, a component file display module 12, a component source code configuration module 13, a component construction module 14, and a multi-end application development module 15.

The data display module 11 is configured to display an application processing interface corresponding to the application project file on the multi-end application platform, and when a mode in the application processing interface is an application development mode corresponding to the multi-end application, display a component creation control preconfigured for the application development mode.

The data display module 11 is further configured to display, in response to a trigger operation for the component creation control, a component creation interface corresponding to the component creation control, and display component configuration information configured for a service component in the component creation interface, the component configuration information including a component identifier of the service component, a component directory address, and a target application identifier bound to the component identifier, and a second application corresponding to the target application identifier being an application in the multi-end application that is different from the first application.

The component file display module 12 is configured to switch the component creation interface back to the application processing interface in response to a confirmation operation for the component configuration information, switch, in response to a mode switching operation for the application processing interface, the mode in the application processing interface from the application development mode to a component development mode configured for developing the service component, and display, in the component development mode by using the component directory address, a component directory file created for the service component, the component directory file being configured for storing a component project file configured for the service component, and component source code in the component project file being template component source code that is adapted to the second application and that carries the component identifier.

The component source code configuration module 13 is configured to obtain, through configuration in response to a configuration operation for the template component source code, a source code invocation statement configured for invoking the service component, and generate component configuration source code of the service component by using the template component source code and the source code invocation statement, the source code invocation statement being configured for establishing a communication channel between a second toolkit of the second application and the service component, and the second toolkit being provided by the multi-end application platform.

The component construction module 14 is configured to obtain the service component through compilation by using the component configuration source code, and publish and display the service component on the multi-end application platform. The multi-end application development module 15 is configured to construct the second application on the multi-end application platform based on the application project file, the second toolkit, and the service component, the second application being configured to indicate, during running, the second toolkit to invoke the service component based on the communication channel, to execute a component service provided by the service component, and the component service being configured for a service of the first application.

The template component source code includes template component registration source code and template component initialization source code for the service component.

The component source code configuration module 13 includes a registration source code configuration unit 131 and a configuration source code determining unit 132.

The registration source code configuration unit 131 is configured to obtain, in response to a registration configuration operation for the template component registration source code, target component registration source code configured for registering the service component, the target component registration source code being configured for invoking the template component initialization source code after component registration of the service component is completed by using the component identifier in the template component source code.

The configuration source code determining unit 132 is configured to configure the target component registration source code configured for invoking the template component initialization source code as the source code invocation statement.

For specific implementations of the registration source code configuration unit 131 and the configuration source code determining unit 132, refer to the foregoing descriptions of the specific implementation of obtaining the source code invocation statement, and details are not described herein again.

The configuration source code determining unit 132 includes an execution method configuration subunit 1321 and a configuration source code determining subunit 1322.

The execution method configuration subunit 1321 is configured to obtain, in response to an execution method configuration operation for the component service, a service execution method configured for the component service.

The configuration source code determining subunit 1322 is configured to obtain the component configuration source code of the service component based on the template component initialization source code, the source code invocation statement, and the service execution method.

For specific implementations of the execution method configuration subunit 1321 and the configuration source code determining subunit 1322, refer to the foregoing descriptions of the specific process of obtaining the component configuration source code, and details are not described herein again.

A debugging statement construction control in the component development mode and a component debugging region in the component development mode are displayed in the application processing interface, and the component debugging region includes a component loading control.

Before the component construction module 14 performs the operation of obtaining the service component through compilation by using the component configuration source code, the component construction module 14 further includes a test component construction unit 141 and a test component debugging unit 142.

The test component construction unit 141 is configured to generate component debugging source code in response to a trigger operation for the debugging statement construction control.

The test component construction unit 141 is further configured to construct, in response to a trigger operation for the component loading control, a test component based on the component configuration source code.

The test component debugging unit 142 is configured to indicate, in a component debugging program corresponding to the component debugging region based on the component debugging source code, the test component to perform component instantiation by using the component configuration source code.

The test component debugging unit 142 is further configured to obtain a test communication channel between the component debugging program and the test component when component instantiation is completed, the test communication channel being configured for debugging the test component.

For specific implementations of the test component construction unit 141 and the test component debugging unit 142, refer to the foregoing descriptions of the specific debugging process of debugging the test component, and details are not described herein again.

The component configuration source code includes the template component initialization source code in the template component source code.

The test component debugging unit 142 includes a test component instance subunit 1421.

The test component instance subunit 1421 is configured to load the test component based on the component debugging source code in the component debugging program, and indicate the test component to invoke the source code invocation statement to perform component registration and invoke the template component initialization source code to perform component initialization after component registration, the component initialization being the component instantiation.

The component configuration source code includes the service execution method configured for the component service, and the component debugging region includes a component invocation control.

The test component debugging unit 142 further includes a test component invocation subunit 1422.

The test component invocation subunit 1422 is configured to obtain, from the component debugging source code in response to a trigger operation for the component invocation control, a test service parameter configured for invoking the service execution method.

The test component invocation subunit 1422 is further configured to transfer, in the component debugging program, the test service parameter to the test component by using a test communication relationship indicated by the established test communication channel, so that the test component invokes the service execution method based on the test service parameter, to execute the component service to obtain a test execution result corresponding to the component service.

The test component invocation subunit 1422 is further configured to determine, based on the test execution result, that debugging of the test component is completed.

For a specific implementation of the test component invocation subunit 1422, refer to the foregoing descriptions of the specific process of debugging the test component by using the test service parameter, and details are not described herein again.

The component configuration source code includes the template component initialization source code in the template component source code and the service execution method configured for the component service.

The component construction module 14 includes a component construction unit 143.

The component construction unit 143 is configured to display a component construction control in the component development mode in the application processing interface.

The component construction unit 143 is further configured to construct the service component based on the template component initialization source code, the source code invocation statement, and the service execution method in response to a trigger operation for the component construction control.

For a specific implementation of the component construction unit 143, refer to the foregoing descriptions of the specific process of constructing the service component, and details are not described herein again.

The component configuration source code includes the service execution method configured for the component service, and the application project file includes an application processing file of the first application.

Before the multi-end application development module 15 performs the operation of constructing the second application on the multi-end application platform based on the application project file, the second toolkit, and the service component, the multi-end application development module 15 is further configured to:
switch, in a mode selection region in the application processing interface, a mode in the mode selection region from the component development mode to the application development mode, and display the application processing file in the application development mode; and
configure, in the application processing file, a first component processing method corresponding to the source code invocation statement and a second component processing method corresponding to the service execution method, to obtain a target application processing file, the first component processing method being configured for indicating the second toolkit to indicate the service component to execute the source code invocation statement, the second component processing method being configured for indicating the second toolkit to indicate the service component to perform the service execution method, and the target application processing file being configured for generating the second application.

The multi-end application development module 15 includes a component adding unit 151 and an application construction unit 152.

The component adding unit 151 is configured to display, in the application processing interface, an application configuration region configured for configuring the second application, the application configuration region including a component adding control in the application development mode.

The component adding unit 151 is further configured to display, in response to a trigger operation for the component adding control, a component adding interface corresponding to the component adding control, and add the component identifier of the service component to the component adding interface.

The component construction unit 152 is configured to display an application construction control in the application development mode in the application processing interface.

The application construction unit 152 is further configured to obtain, in response to a trigger operation for the application construction control, the service component from the multi-end application platform by using the component identifier added in the component adding interface, and generate the second application based on the target application processing file, the second toolkit, and the service component.

The application construction unit 152 is specifically configured to:
obtain the target application identifier by using the component identifier added in the component adding interface; and
obtain the service component corresponding to the target application identifier bound to the component identifier from the multi-end application platform if the target application identifier associated with the service component is an application identifier of the second application.

For specific implementations of the data display module 11, the component file display module 12, the component source code configuration module 13, the component construction module 14, and the multi-end application development module 15, refer to the related descriptions in the foregoing embodiments, and details are not described herein again. Details of beneficial effects of the same method are not described herein again.

Further, referring to FIG. 19, FIG. 19 is a schematic diagram of a structure of a data processing apparatus based on a multi-end application platform according to an embodiment of the present disclosure. A multi-end application on the multi-end application platform includes a first application and a second application. The second application is constructed on the multi-end application platform by using an application project file of the first application, a second toolkit, and a service component. The second toolkit is provided by the multi-end application platform for the second application. The service component is constructed on the multi-end application platform based on component configuration source code. The component configuration source code is obtained in response to a configuration operation for template component source code. A source code invocation statement corresponding to the configuration operation is configured for establishing a communication channel between the second toolkit and the service component. The template component source code is component source code in a component project file displayed in a component development mode. The component development mode is a mode in an application processing interface that corresponds to the application project file and that is displayed on the multi-end application platform. The component project file is stored in a component directory file created for the service component. The component directory file is determined by using a component directory address in component configuration information configured for the service component. As shown in FIG. 19, the data processing apparatus 2 based on the multi-end application platform may include a service parameter obtaining module 21, a service processing module 22, a result display module 23, and a component loading module 24.

The service parameter obtaining module 21 is configured to obtain, in response to a trigger operation for a service control corresponding to the service component during running of the second application, a service parameter configured for invoking the service component.

The service processing module 22 is configured to transfer the service parameter to the second toolkit, the second toolkit transferring the service parameter to the service component based on a communication relationship indicated by the established communication channel, so that the service component executes a component service based on the service parameter, to obtain a service execution result corresponding to the component service, and returns the service execution result to the second toolkit by using the communication relationship indicated by the communication channel, the communication channel being established based on the source code invocation statement in the service component when the second toolkit loads the service component, and the component service being configured for a service of the first application.

The result display module 23 is configured to display the service execution result returned by the second toolkit.

The second application includes a first component processing method corresponding to the source code invocation statement.

The apparatus 2 further includes the component loading module 24.

The component loading module 24 is configured to invoke the second toolkit based on the first component processing method, to load the service component and indicate the service component to invoke the source code invocation statement to perform component instantiation.

The component loading module 24 is configured to obtain the communication channel between the second toolkit and the service component when component instantiation is completed.

The component configuration source code includes template component initialization source code in the template component source code.

The component loading module 24 is specifically configured to:
obtain a component identifier of the service component from the first component processing method; and
transfer the component identifier to the second toolkit, so that the second toolkit loads the service component based on the component identifier, and indicates the service component to invoke the source code invocation statement to perform component registration and invoke the template component initialization source code to perform component initialization after component registration, the component initialization being the component instantiation.

The component configuration source code includes a service execution method configured for the component service, and the second application includes a second component processing method corresponding to the service execution method.

The service parameter obtaining module 21 is specifically configured to:
obtain, from the second component processing method, the service parameter configured for invoking the service component, the service parameter being configured for indicating the service component to invoke the service execution method to execute the component service.

For specific implementations of the service parameter obtaining module 21, the service processing module 22, the result displaying module 23, and the component loading module 24, refer to the related descriptions in the foregoing embodiments, and details are not described herein again. Details of beneficial effects of the same method are not described herein again.

In the embodiments of the present disclosure, the term "module" or "unit" is a computer program with a preset function or a part of a computer program and operates, together with other related parts, to implement a preset target, and may be completely or partially implemented by using software, hardware (for example, a processing circuit or a memory), or a combination thereof. Similarly, one processor (or a plurality of processors or memories) may be configured to implement one or more modules or units. In addition, each module or unit may be a part of an overall module or unit including a function of the module or the unit.

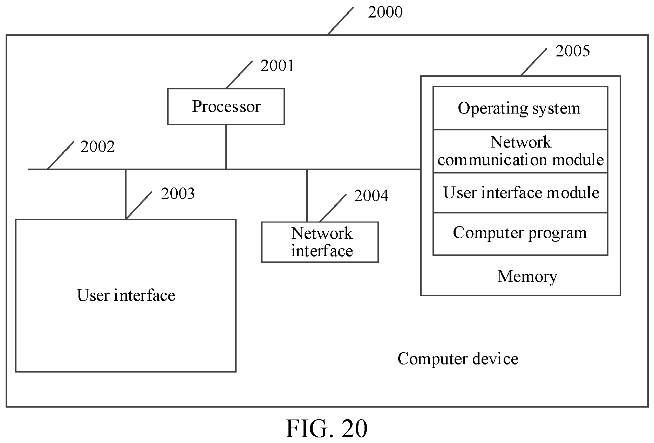

Further, referring to FIG. 20, FIG. 20 is a schematic diagram of a structure of a computer device according to an embodiment of the present disclosure. As shown in FIG. 20, the computer device 2000 may be a terminal or a server. This is not limited herein. For ease of understanding, an example in which the computer device is a server is used in the present disclosure. The computer device 2000 may include a processor 2001, a network interface 2004, and a memory 2005. In addition, the computer device 2000 may further include a user interface 2003 and at least one communication bus 2002. The communication bus 2002 is configured to implement connection and communication between the components. The user interface 2003 may further include a standard wired interface and wireless interface. In some embodiments, the network interface 2004 may include a standard wired interface and a standard wireless interface (for example, a wireless fidelity (Wi-Fi) interface). The memory 2005 may be a high-speed random access memory (RAM), or may be a non-volatile memory, for example, at least one disk memory. In some embodiments, the memory 2005 may alternatively be at least one storage apparatus away from the foregoing processor 2001. As shown in FIG. 20, the memory 2005 used as a computer-readable storage medium may include an operating system, a network communication module, a user interface module, and a computer program.

The network interface 2004 of the computer device 2000 may further provide a network data exchange function. In the computer device 2000 shown in FIG. 20, the network interface 2004 may provide the network data exchange function. The user interface 2003 is mainly configured to provide an input interface for a user. The processor 2001 may be configured to invoke the computer program stored in the memory 2005, to execute the descriptions of the data processing method based on the multi-end application platform in the foregoing embodiments corresponding to FIG. 4, FIG. 11, and FIG. 16, and to execute the descriptions of the data processing apparatus 1 based on the multi-end application platform in the foregoing embodiment corresponding to FIG. 18 and the data processing apparatus 2 based on the multi-end application platform in the foregoing embodiment corresponding to FIG. 19. Details are not described herein again. In addition, details of beneficial effects of the same method are not described herein again.

In addition, an embodiment of the present disclosure further provides a computer-readable storage medium. The computer-readable storage medium stores a computer program executed by the foregoing data processing apparatus 1 based on the multi-end application platform and the foregoing data processing apparatus 2 based on the multi-end application platform. When a processor executes the computer program, the descriptions of the data processing method based on the multi-end application platform in the embodiment corresponding to FIG. 4, FIG. 11, or FIG. 16 can be executed. Therefore, details are not described herein again. In addition, details of beneficial effects of the same method are not described herein again. For technical details that are not disclosed in the embodiment of the computer-readable storage medium in the present disclosure, refer to the descriptions in the method embodiments of the present disclosure. In an example, the computer program may be deployed to be executed on one computer device, executed on a plurality of computer devices at one location, or executed on a plurality of computer devices distributed at a plurality of locations and connected to each other through a communication network. The plurality of computer devices distributed at the plurality of locations and connected to each other through the communication network may form a blockchain system.

In addition, according to an aspect of the present disclosure, a computer program product is provided, and includes a computer program. The computer program is executed by a processor to implement the method according to any one of the foregoing aspects of the embodiments of the present disclosure. The processor of a computer device reads the computer program from a computer-readable storage medium. The processor may execute the computer program, so that the computer device executes the descriptions of the data processing method based on the multi-end application platform in the embodiment corresponding to FIG. 4, FIG. 11, or FIG. 16. Therefore, details are not described herein again. In addition, details of beneficial effects of the same method are not described herein again. For technical details that are not disclosed in the embodiment of the computer program product in the present disclosure, refer to the descriptions in the method embodiments of the present disclosure.

For ease of description, each of the foregoing method embodiments is described as a series of combinations of actions. However, a person skilled in the art is aware that the present disclosure is not limited to the described order of the actions, because some steps may be performed in another order or simultaneously according to the present disclosure. In addition, a person skilled in the art is also to learn that the embodiments described in this specification are all exemplary embodiments, and the involved actions and modules are not necessarily required to the present disclosure.

The operations of the methods in the embodiments of the present disclosure may be adjusted in terms of a sequence, combined, and deleted based on an actual requirement.

The modules of the apparatuses of the embodiments of the present disclosure may be combined, divided, or deleted based on an actual requirement.

A person of ordinary skill in the art may understand that all or a part of procedures of the methods in the foregoing embodiments may be implemented by a computer program instructing relevant hardware. The computer program may be stored in a computer-readable storage medium. When the computer program is executed, the procedures in the foregoing method embodiments may be performed. The storage medium may include a magnetic disc, an optical disc, a read-only memory (ROM), a random access memory (RAM), or the like.

What is disclosed above is merely exemplary embodiments of the present disclosure, and certainly is not intended to limit the scope of the claims of the present disclosure. Therefore, equivalent variations made in accordance with the claims of the present disclosure shall fall within the scope of the present disclosure.

## Claims

1. A method for providing a multi-end application on a multi-end application platform by using an application project file of a first application, the method comprising:
when a mode of an application processing interface corresponding to the application project file is an application development mode, displaying a component creation control preconfigured for the application development mode;
displaying component configuration information for a service component on a component creation interface corresponding to the component creation control, the component configuration information comprising a component identifier of the service component, a component directory address, and a target application identifier bound to the component identifier, and a second application corresponding to the target application identifier being an application in the multi-end application that is different from the first application;
switching the mode of the application processing interface from the application development mode to a component development mode configured for developing the service component, and acquiring, in the component development mode by using the component directory address, a component project file configured for the service component, and generating component configuration source code of the service component based on a component source code in the component project file and a source code invocation statement; and
obtaining the service component through compilation by using the component configuration source code, wherein the service component, when being invoked by the second application, is configured to execute a component service configured for a service of the first application.

2. The method according to claim 1, further comprising: before the generating component configuration source code of the service component based on a component source code in the component project file and a source code invocation statement,
configuring, in response to a configuration operation for a template component source code, a source code invocation statement configured for invoking the service component, the component source code in the component project file being template component source code that is adapted to the second application and that carries the component identifier,
the template component source code comprises template component registration source code and template component initialization source code for the service component; and
the configuring, in response to a configuration operation for a template component source code, a source code invocation statement configured for invoking the service component comprises:
obtaining, in response to a registration configuration operation for the template component registration source code, target component registration source code configured for registering the service component, the target component registration source code being configured for invoking the template component initialization source code after component registration of the service component is completed by using a component identifier in the template component source code; and
configuring the target component registration source code configured for invoking the template component initialization source code as the source code invocation statement.

3. The method according to any one of claims 1 and 2, wherein the generating component configuration source code of the service component based on a component source code in the component project file and a source code invocation statement comprises:
obtaining, in response to an execution method configuration operation for the component service, a service execution method configured for the component service; and
obtaining the component configuration source code of the service component based on a template component initialization source code, the source code invocation statement, and the service execution method.

4. The method according to any one of claims 1 to 3, wherein before obtaining the service component through compilation by using the component configuration source code, the method further comprises:
generating, on the multi-end application platform in response to a trigger operation for the debugging statement construction control in the component development mode, component debugging source code configured for performing component debugging on the component configuration source code;
constructing, in response to a trigger operation for a component loading control comprised in a component debugging region in the component development mode, a test component by using the component configuration source code;
indicating, in a component debugging program corresponding to the component debugging region based on the component debugging source code, the test component to perform component instantiation by using the component configuration source code, the component debugging program being determined by a second toolkit of the second application provided by the multi-end application platform for the component debugging source code; and
obtaining a test communication channel between the component debugging program and the test component when component instantiation is completed, the test communication channel being configured for debugging the test component.

5. The method according to any one of claims 1 to 4, wherein the component configuration source code comprises a template component initialization source code in a template component source code; and
the indicating, in a component debugging program corresponding to a component debugging region based on the component debugging source code, the test component to perform component instantiation by using the component configuration source code comprises:
loading the test component based on the component debugging source code in the component debugging program, and indicating the test component to invoke the source code invocation statement to perform component registration and invoke the template component initialization source code to perform component initialization after component registration, the component initialization being the component instantiation.

6. The method according to any one of claims 1 to 5, wherein the component configuration source code comprises a service execution method configured for the component service, and a component debugging region comprises a component invocation control; and
the method further comprises:
obtaining, from a component debugging source code in response to a trigger operation for the component invocation control, a test service parameter configured for invoking the service execution method;
transferring, in a component debugging program, the test service parameter to a test component by using a test communication relationship indicated by a test communication channel, so that the test component invokes the service execution method based on the test service parameter, to execute the component service to obtain a test execution result corresponding to the component service; and
determining, when the test execution result indicates a test success, that component debugging of the test component is completed.

7. The method according to any one of claims 1 to 6, wherein the component configuration source code comprises a template component initialization source code in a template component source code and a service execution method configured for the component service; and
the obtaining the service component through compilation by using the component configuration source code comprises:
displaying a component construction control in the component development mode in the application processing interface; and
constructing the service component based on the template component initialization source code, the source code invocation statement, and the service execution method in response to a trigger operation for the component construction control.

8. The method according to any one of claims 1 to 7, wherein the component configuration source code comprises a service execution method configured for the component service, and the application project file comprises an application processing file of the first application; and
the method further comprises:
switching, in a mode selection region in the application processing interface, the mode from the component development mode to the application development mode, and displaying the application processing file in the application development mode;
configuring, in the application processing file, a first component processing method corresponding to the source code invocation statement and a second component processing method corresponding to the service execution method, to obtain a target application processing file, the first component processing method indicating a second toolkit of the second application provided by the multi-end application platform to indicate the service component to execute the source code invocation statement, the second component processing method being configured for indicating the second toolkit to indicate the service component to perform the service execution method, and the target application processing file being configured for generating the second application.

9. The method according to any one of claims 1 to 8, further comprising:
displaying, in the application processing interface, an application configuration region configured for configuring the second application, the application configuration region comprising a component adding control in the application development mode;
displaying, in response to a trigger operation for the component adding control, a component adding interface corresponding to the component adding control, and adding the component identifier of the service component to the component adding interface;
displaying an application construction control in the application development mode in the application processing interface; and
obtaining, in response to a trigger operation for the application construction control, the service component from the multi-end application platform by using the component identifier added in the component adding interface, and generating the second application based on a target application processing file, the second toolkit, and the service component.

10. The method according to any one of claims 1 to 9, wherein the obtaining the service component from the multi-end application platform by using the component identifier added in the component adding interface comprises:
obtaining the target application identifier by using the component identifier added in the component adding interface; and
obtaining the service component corresponding to the target application identifier bound to the component identifier from the multi-end application platform if the target application identifier associated with the service component is an application identifier of the second application.

11. A data processing method based on a multi-end application platform, a multi-end application on the multi-end application platform comprising a first application and a second application, the second application being constructed on the multi-end application platform by using an application project file of the first application, a second toolkit, and a service component, the second toolkit being provided by the multi-end application platform for the second application, the service component being constructed on the multi-end application platform based on component configuration source code, the component configuration source code being obtained in response to a configuration operation for template component source code, a source code invocation statement corresponding to the configuration operation being configured for establishing a communication channel between the second toolkit and the service component, the template component source code being component source code in a component project file displayed in a component development mode, the component development mode being a mode in an application processing interface that corresponds to the application project file and that is displayed on the multi-end application platform, the component project file being stored in a component directory file created for the service component, the component directory file being determined by using a component directory address in component configuration information configured for the service component, and the method comprising:
obtaining, in response to a trigger operation for a service control corresponding to the service component during running of the second application, a service parameter configured for invoking the service component;
transferring the service parameter to the second toolkit, the second toolkit transferring the service parameter to the service component based on a communication relationship indicated by the established communication channel, so that the service component executes a component service based on the service parameter, to obtain a service execution result corresponding to the component service, and returns the service execution result to the second toolkit by using the communication relationship indicated by the communication channel, the communication channel being established based on the source code invocation statement in the service component when the second toolkit loads the service component, and the component service being configured for a service of the first application; and
displaying the service execution result returned by the second toolkit.

12. The method according to claim 11, wherein the second application comprises a first component processing method corresponding to the source code invocation statement; and
the method further comprises:
invoking the second toolkit based on the first component processing method, to load the service component and indicate the service component to invoke the source code invocation statement to perform component instantiation; and
obtaining the communication channel between the second toolkit and the service component when component instantiation is completed.

13. The method according to any one of claims 11 and 12, wherein the component configuration source code comprises template component initialization source code in the template component source code; and
the invoking the second toolkit based on the first component processing method, to load the service component and indicate the service component to invoke the source code invocation statement to perform component instantiation comprises:
obtaining a component identifier of the service component from the first component processing method; and
transferring the component identifier to the second toolkit, so that the second toolkit loads the service component based on the component identifier, and indicates the service component to invoke the source code invocation statement to perform component registration and invoke the template component initialization source code to perform component initialization after component registration, the component initialization being the component instantiation.

14. The method according to any one of claims 11 to 13, wherein the component configuration source code comprises a service execution method configured for the component service, and the second application comprises a second component processing method corresponding to the service execution method; and
the obtaining a service parameter configured for invoking the service component comprises:
obtaining, from the second component processing method, the service parameter configured for invoking the service component, the service parameter being configured for indicating the service component to invoke the service execution method to execute the component service.

15. A device for providing a multi-end application on a multi-end application platform by using an application project file of a first application, and the device comprising:
a data display module configured to, when a mode of an application processing interface corresponding to the application project file is an application development mode, display a component creation control preconfigured for the application development mode;
the data display module being further configured to display component configuration information configured for a service component on a component creation interface corresponding to the component creation control, the component configuration information comprising a component identifier of the service component, a component directory address, and a target application identifier bound to the component identifier, and a second application corresponding to the target application identifier being an application in the multi-end application that is different from the first application;
a component file display module configured to switch the mode of the application processing interface from the application development mode to a component development mode configured for developing the service component, and acquire, in the component development mode by using the component directory address, a component project file configured for the service component;
a component source code configuration module configured to generate component configuration source code of the service component based on a component source code in the component project file and source code invocation statement;
a component construction module, configured to obtain the service component through compilation by using the component configuration source code, wherein the service component, when being invoked by the second application, is configured to execute a component service configured for a service of the first application.

16. A data processing apparatus based on a multi-end application platform, a multi-end application on the multi-end application platform comprising a first application and a second application, the second application being constructed on the multi-end application platform by using an application project file of the first application, a second toolkit, and a service component, the second toolkit being provided by the multi-end application platform for the second application, the service component being constructed on the multi-end application platform based on component configuration source code, the component configuration source code being obtained in response to a configuration operation for template component source code, a source code invocation statement corresponding to the configuration operation being configured for establishing a communication channel between the second toolkit and the service component, the template component source code being component source code in a component project file displayed in a component development mode, the component development mode being a mode in an application processing interface that corresponds to the application project file and that is displayed on the multi-end application platform, the component project file being stored in a component directory file created for the service component, the component directory file being determined by using a component directory address in component configuration information configured for the service component, and the apparatus comprising:
a service parameter obtaining module, configured to obtain, in response to a trigger operation for a service control corresponding to the service component during running of the second application, a service parameter configured for invoking the service component;
a service processing module, configured to transfer the service parameter to the second toolkit, the second toolkit transferring the service parameter to the service component based on a communication relationship indicated by the established communication channel, so that the service component executes a component service based on the service parameter, to obtain a service execution result corresponding to the component service, and returns the service execution result to the second toolkit by using the communication relationship indicated by the communication channel, the communication channel being established based on the source code invocation statement in the service component when the second toolkit loads the service component, and the component service being configured for a service of the first application; and
a result display module, configured to display the service execution result returned by the second toolkit.

17. A computer device, comprising a memory and a processor,
the memory being connected to the processor, the memory being configured to store a computer program, and the processor being configured to invoke the computer program, so that the computer device performs the method according to any one of claims 1 to 14.

18. A computer-readable storage medium, having a computer program stored therein, the computer program being suitable for a processor to load and execute, so that a computer device with the processor performs the method according to any one of claims 1 to 14.

19. A computer program product, comprising a computer program, the computer program being executed by a processor to implement the method according to any one of claims 1 to 14.
